(19) Europäisches Patentamt
European Patent Office
Office européen des brevets

(11) EP 4 238 949 A1

(12) EUROPEAN PATENT APPLICATION

(43) Date of publication:
**06.09.2023 Bulletin 2023/36**

(21) Application number: **23155418.9**

(22) Date of filing: **07.02.2023**

(51) International Patent Classification (IPC):
***C04B 28/04*** *(2006.01)* ***C04B 28/06*** *(2006.01)*
***C04B 111/94*** *(2006.01)*

(52) Cooperative Patent Classification (CPC):
(C-Sets available)
**C04B 28/04; C04B 28/06; C04B 28/065;**
C04B 2111/94 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.02.2022 IT 202200002330**

(71) Applicant: **ITALCEMENTI S.p.A.**
**24126 Bergamo (IT)**

(72) Inventors:
- **MOLFETTA, Marcello Antonio**
  **24124 Bergamo (IT)**
- **BERARDI, Roberto**
  **20098 San Giuliano Milanese (IT)**
- **PLACIDI, Luca**
  **00143 Roma (IT)**

(74) Representative: **De Gregori, Antonella et al**
**BIRD & BIRD SOCIETA TRA AVVOCATI S.R.L.**
**Via Porlezza, 12**
**20123 Milano (IT)**

# (54) USE OF AN ELECTRICALLY CONDUCTIVE BINDER FOR MONITORING THE DEFORMATION AND CRACKING STATE OF CONCRETE STRUCTURES

(57) The use of an electrically conductive binder is described for monitoring the deformation and cracking state of concrete structures and the relative cement mix and self-sensing concrete.

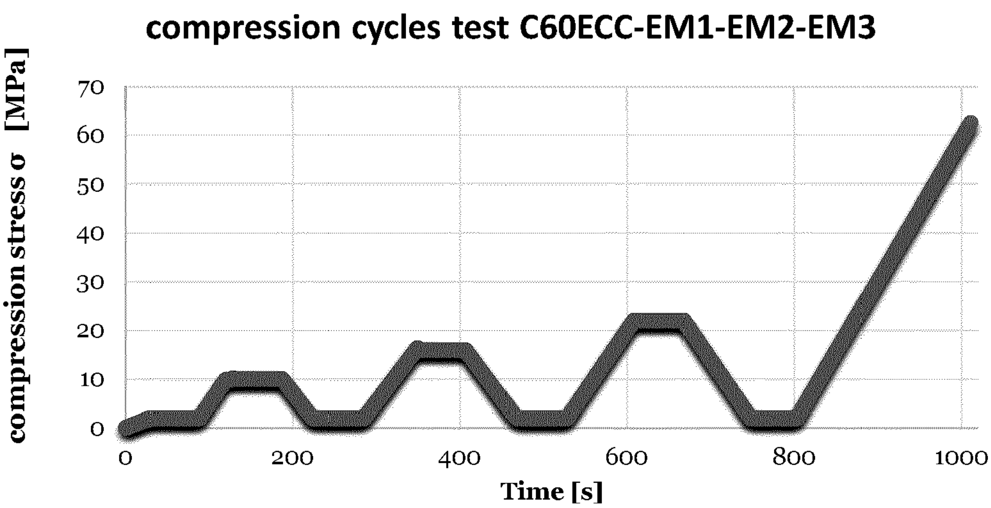


Fig. 3

EP 4 238 949 A1

(52) Cooperative Patent Classification (CPC): (Cont.)

C-Sets
**C04B 28/065, C04B 7/02, C04B 7/32,**
**C04B 14/022, C04B 14/024, C04B 14/48,**
**C04B 22/064, C04B 24/02, C04B 24/24,**
**C04B 24/2641, C04B 24/38, C04B 24/383,**
**C04B 24/42, C04B 2103/32**

## Description

The present invention relates to the use of an electrically conductive binder for monitoring the deformation and cracking state of concrete structures or structures based on cement and/or the like, in particular pillars, beams, slabs and walls subject to static and dynamic loads.

According to the state of the art, information about the deformation and cracking state of a conventional concrete can only be obtained thanks to the presence of additional point measuring devices.

Methods for detecting deformations and cracks for concrete provide in fact for the use of sensors such as strain gauges and/or the use of ultrasound wave instrumentation. These survey techniques, in addition to requiring an intricate network of sensors, also suffer from contamination of background noise, disturbance from secondary sources and only effect point surveys on the structure.

The state of the art relating to self-sensing concretes, has alternatively indicated solutions which provide for the incorporation of carbon and steel fibers in cementitious materials with the aim of lowering the resistivity of the cement materials themselves depending on the size, content and distribution of the fiber.

Various studies carried out with direct current (DC) probes immersed in cement pastes containing carbon fibers have shown that the electrical resistance can be related to the mechanical deformation. Other studies have incorporated carbon nanotubes and carbon nanofibers in a cement matrix for also increasing the electrical conductivity and have defined a correlation between the change in electrical resistance and the deformation of the material under the action of compression. The effect of the fibers and the ratio between the two main dimensions, diameter and length, of the fiber (i.e. its ratio aspect) was evaluated on the basis of the piezo-resistive behaviour of cementitious composites reinforced with carbon fibers under compression. Other studies, instead of using conductive fibers, have modified the aggregate-cement interface by applying a pre-coating of latex film containing multiwall carbon nanotubes to the fine and coarse aggregates. This method makes it possible to reduce the quantity of carbon nanotubes (particularly expensive), but does not solve the problem of dispersion of the nanotubes in the cement matrix.

The state of the art has therefore essentially focused on reducing the resistivity of cementitious materials in order to improve their piezo-resistive behaviour under direct current (DC), by adding conductive fibers or carbon nanotubes or using coated aggregates.

The cement structure obtained with these methods remains heterogeneous and with high resistivity values (> $2 * 10^{-2}$ $\Omega$m). In some applications alternating current is used instead of direct current for reducing the polarizing effect associated with the use of direct current, but this is not sufficient for allowing the microstructure of the material to be defined by a single resistor, requiring however a complex electrical circuit consisting of capacitors, resistors and inductors with distributed circuit elements.

Documents CN112500067A and WO 2021/093445A1 are examples of this state of the art. CN112500067A, in fact, describes self-sensing concretes containing multiwall carbon nanotubes and graphite powder particles with dimensions equal to approximately 325 mesh. In WO 2021/093445A1, on the other hand, self-sensing concretes are described in which there is no graphite but only graphene.

The objective of the present invention is therefore to identify an alternative way for monitoring the deformation and cracking state of concrete structures which overcomes the drawbacks of the state of the art.

The present invention therefore relates to the use of an electrically conductive binder for monitoring the deformation and cracking state of concrete structures, such as for example bridges, viaducts, pylons, etc., wherein said electrically conductive binder comprises the following components:

- cement in a quantity ranging from 40 to 80%, preferably from 45 to 70%, more preferably from 50 to 65%, expressed as a weight % with respect to the total weight of the electrically conductive binder;
- graphite in a quantity ranging from 19.5 to 60%, preferably from 25 to 50%, more preferably from 30 to 40%, expressed as a weight % with respect to the total weight of the electrically conductive binder, said graphite having a carbon content by weight ranging from 45% to 100% with respect to the total weight of the graphite;
- graphene (calculated as dry matter) in a quantity ranging from 0 to 0.5%, preferably from 0.005 to 0.4%, more preferably from 0.2 to 0.3% expressed as a weight % with respect to the total weight of the electrically conductive binder;
- metal fibers, preferably steel, in a quantity ranging from 0 to 15%, preferably from 4 to 8%, expressed as a weight % with respect to the total weight of the electrically conductive binder;
- at least one superplasticizer (calculated as dry matter) in a quantity ranging from 0 to 2%, preferably from 0.45 to 1%, expressed a weight % with respect to the total weight of the electrically conductive binder;
- at least one rheology modifier (calculated as dry matter) in a quantity ranging from 0 to 0.9%, preferably from 0.03 to 0.6%, expressed as a weight % with respect to the total weight of the electrically conductive binder;
- at least one expansive mineral agent in a quantity ranging from 0 to 9%, preferably from 2 to 7%, expressed as a weight % with respect to the total weight of the electrically conductive binder;

- at least one defoamer (calculated as dry matter) in a quantity ranging from 0 to 0.3%, preferably from 0.05 to 0.2%, expressed as a weight % with respect to the total weight of the electrically conductive binder,

wherein the sum of all the components present in said electrically conductive binder is equal to 100%.

Further additions, such as water reducers, pigments, polymers, calcareous fillers, fillers and/or silica fumes, can be added to the electrically conductive binder described above.

In particular, the graphene, superplasticizer, rheology modifier and defoamer are calculated as dry matter. In this text, the expression "*calculated as dry matter*" means that the component is in solid form or it refers to the percentage of solid part of the component if it is in liquid form.

The present invention also relates to the use of a cement mixture comprising the electrically conductive binder and water, which is obtained starting from the electrically conductive binder, i.e. cement, the additives listed above and/or (further) additions, with the subsequent addition of water.

In the cement mix, the water/cement weight ratio typically ranges from 0.6 to 1.5, preferably from 0.8 to 1.1. Consequently, the weight ratio of water/electrically conductive binder varies within the range of 0.48 to 0.65, preferably from 0.5 to 0.6.

The characteristics of the cement mix, obtained starting from the electrically conductive binder, can be adjusted by adding water so as to adapt the mix to the specific requirements of the intended use.

If the quantity of water or superplasticizers and/or water reducers is increased, for example, the cement mix of electrically conductive binder and water becomes more fluid and can be used for horizontal applications where a greater fluidity is provided for, if the quantities of water or superplasticizers are reduced, on the other hand, the cement mix of electrically conductive binder and water acquires a less fluid consistency, suitable for vertical applications. In particular, for vertical applications a water/cement weight ratio ranging from 0.6 to 0.94 is used and for horizontal applications a water/cement weight ratio ranging from 0.94 to 1.5.

This electrically conductive binder is described in patent application EP3838864 exclusively for the construction of heatable concrete structures or cement-based and/or similar structures.

The applicant has surprisingly found that the electrically conductive binder described in EP'864 has an electromechanical behaviour which interacts extremely well with the different deformations and cracks of reinforced, non-reinforced and fiber-reinforced concrete, both under compression and traction.

The use of the electrically conductive binder according to the present invention is therefore particularly advantageous as, in addition to being an easy-to-apply solution, it allows an entire structure to be monitored by applying a layer of electrically conductive binder on the surface of the structure itself or providing for an integration of the electrically conductive binder in the structure itself.

The use of the electrically conductive binder according to the present invention therefore allows a distributed and direct self-sensing of cracks and deformations to be obtained, of the concrete structure on which said binder is applied, with continuous spatial resolution and without installing further sensors.

Using a simple continuous electrical-resistance measurement instrument, it is in fact possible to measure the damage deriving from the deterioration of the concrete, both due to the operating life, i.e. to the loads supported, and also due to the aging of the structure itself.

The use of the electrically conductive binder according to the present invention therefore allows deformations and the state of cracking of concrete structures to be monitored thanks to the low resistivity of this material (<0.25 Qm) which also allows the flow of current at very low voltage, at the same time maintaining adequate processability and properties in the hardened state. Exploitation of these resistive properties of the electrically conductive binder, in fact, enables relevant information to be obtained as the geometric dimensions of the electrically conductive binder vary according to the deformations and cracks exerted by the support on which it is applied.

The use of the electrically conductive binder according to the present invention therefore represents an application of particular interest, for example, for monitoring the deformations and state of cracking of structures such as bridges, viaducts, pylons, etc.

The present invention further relates to a self-sensing concrete characterized by the use of the electrically conductive binder according to the present invention, wherein said concrete comprises a concrete structure and a cementitious mixture, consisting of the electrically conductive binder and water, applied on the surface of the concrete structure or integrated into a part of the structure itself.

This solution is particularly advantageous as the electrically conductive binder is in fact a resistor with a resistivity lower than 0.25 Qm which is applied to the structure to be monitored or integrated into a part of the structure itself and does not require the incorporation of electrodes in the same connected to direct current or alternating current sources, but only that it be connected even by simple surface contact to a simple instrument for measuring electrical resistance over time (such as a multimeter with a 4.5V battery). It therefore allows the constant monitoring of the deformation and cracking state of the entire structure on which it is applied, without the need for applying any electric voltage, direct (DC) or alternating (AC), to the concrete support and, at the same time, it also allows monitoring of the entire part of the structure on which it is applied.

Examples of cements suitable for the binder for use according to the present invention are all known cements which are capable of hardening after mixing with water by hydraulic reactions, preferably Portland cement and the composite cements defined by standards EN 197-1:2011, EN 197-5:2021 or ASTM C150/C150M-21.

Other examples of cements suitable for use according to the present invention are the following: super-sulfated cement, calcium aluminate cement, calcium sulfoaluminate cement (optionally also containing one or more phases between belite, ferrite and ternesite). A binder of the geopolymer type can also be used as cement.

In a preferred aspect of the invention, the cement is CEM I 52.5 (R or N) cement as defined according to the standard EN 197-1:2011.

Examples of superplasticizers suitable for the binder for use according to the present invention are sterically stabilizing superplasticizers.

The superplasticizer is preferably a polycarboxylate-ether (PCE)-based copolymer or mixtures thereof.

The superplasticizer is normally present (calculated as dry matter) in a quantity ranging from 0 to 2%, preferably from 0.45 to 1%, expressed as a weight % with respect to the total weight of the electrically conductive binder. It is also possible for the superplasticizer component to be added to the mix in liquid form, even if the quantities provided for are expressed in dry form.

Other superplasticizers which have an effect based on electrostatic repulsion such as sulfonated naphthalene formaldehyde condensate, sulfonated melamine formaldehyde condensate and sulfonated acetone formaldehyde condensate, are not suitable.

Examples of rheology modifiers suitable for the binder for use according to the present invention are preferably selected from cellulose or a functionalized cellulose having a weight molecular weight ranging from 20 to 20,000 Da, polyethylene glycol, diethylene glycol, Arabic gum, polyvinyl alcohol/acetate, polyvinylpyrrolidone, colloidal silica, polyacrylamide, latex and mixtures thereof.

The rheology modifier (calculated as dry matter) is usually present in a quantity ranging from 0 to 0.9%, preferably from 0.03 to 0.6%, expressed as weight % with respect to the total weight of the electrically conductive binder.

Examples of expansive mineral agents suitable for the binder for use according to the present invention are calcium oxide, calcium sulfo-aluminate, calcium sulfate or mixtures thereof, preferably calcium oxide.

The expansive mineral agent is normally present in a quantity ranging from 0 to 9%, preferably from 2 to 7%, expressed as weight % with respect to the total weight of the electrically conductive binder.

Examples of defoamers suitable for the binder for use according to the present invention are tributyl phosphate, polyacrylate, modified siloxane, polyethersiloxane or mixtures thereof, preferably tributyl phosphate.

The defoamer (calculated as dry matter) is normally present in a quantity ranging from 0 to 0.3%, preferably from 0.05 to 0.2%, expressed as weight % with respect to the total weight of the electrically conductive binder.

The graphite is a natural form of crystalline carbon with the atoms arranged in a hexagonal structure. It is naturally in this form and is the most stable form of carbon under standard conditions. The graphite has a low electrical resistivity in the order of $10^{-6}$ $\Omega$m at room temperature.

The quantity of graphite ranges from 19.5 to 60%, preferably from 25 to 50%, more preferably from 30 to 40%, expressed in weight % with respect to the total weight of the electrically conductive binder.

The graphite of the invention has a carbon content by weight ranging from 45% to 100%, preferably from 60% to 100%.

The preferred type of graphite is natural graphite in flakes, preferably with a carbon content by weight higher than 90% by weight or more preferably than 94% by weight. Even more preferably, it is natural lamellar graphite with a cumulative passage through the 150-mesh or 100-mesh sieve higher than 80%.

The maximum moisture content is typically equal to 0.5% by total weight of the graphite.

Suitable graphite is commercially available, e.g. marketed under the name of Timerex M150 or Timerex M100 by Imerys Graphite & Carbon Switzerland Ltd, CH.

Timerex M150 graphite with a Mastersizer laser (Malvern), has a cumulative passage through a 150 mesh-(106$\mu$m) sieve higher than 80%.

Timerex M100 graphite is characterized by a cumulative passage through a 100-mesh (150 $\mu$m) sieve higher than 80%.

Graphene has an exceptionally low resistivity value, equal to about $10^{-8}$ $\Omega$m at room temperature.

The term graphene is often used generically and inaccurately for describing the numerous known graphene-based materials and this inconsistency in naming causes confusion.

The term graphene generally refers to sets of a few layers of graphite, from 1 to 10 sheets or atomic planes of carbon (but with thicknesses lower than 100 nm), according to the classification proposed by P.Wick et al. "Classification Framework for Graphene-Based Materials", Angewandte Chemie Int. Vol. 53 (nr 30), pages 7714-7718.

Within the context of the present invention, graphene is used as graphene paste which is a paste of graphite nanoplatelets or as dry graphene as such. In the present invention, graphene does not include graphene oxide or other functional graphene products.

The graphene paste of the invention has from 10 to 100 layers of commercially available graphite nanoplatelets, e.g. such as G2Nan, both in powder and paste form, marketed by Nanesa S.r.l., IT.

The quantity of graphene, calculated as dry matter, varies from 0 to 0.5%, preferably from 0.005 to 0.4%, more preferably from 0.2 to 0.3% expressed as weight % with respect to the total weight of the electrically conductive binder.

When the graphene is used in paste form, e.g. a paste with 5% of active matter, it is preferably used in a quantity ranging from 0 to 10%, preferably from 2 to 8%, more preferably from 4 to 6% by weight of the paste with respect to the total weight of the electrically conductive binder.

The weight ratio between graphene and graphite preferably ranges from 0.001 to 0.02, preferably from 0.002 to 0.015 and more preferably from 0.005 to 0.01.

The graphene with graphite nanoplatelets, preferably has a flake or sheet thickness of about 10 nm and a specific surface area greater than 30 $m^2$.

A further component of the binder for use according to the present invention are steel fibers of different forms, preferably having an aspect ratio ranging from 50 to 80, which allow for a further increase in the conductivity.

Preferred fibers are of the straight stainless type, for example with 12.5 mm in length and 0.2 mm in diameter (available e.g. from 20 KrampeHarex GmbH & Co. KG, DE).

The metal fibers, preferably made of steel, are present in a quantity ranging from 0 to 15%, preferably from 4 to 8%, expressed as weight % with respect to the total weight of the electrically conductive binder.

The metal fibers preferably have an aspect ratio ranging from 50 to 80, they are more preferably straight steel fibers with a length equal to 12.5 mm and a diameter equal to 0.2 mm.

The preparation of the electrically conductive mixture for use according to the present invention can comprise the following steps:

- step 1: mixing cement (powder), graphite (powder), graphene (in paste or dry form), adding a superplasticizer (if using dry material), a rheology modifier (if using dry material) and any additional additives (powders) in a special device (step 1);
- step 2: adding water, liquid additives (if present) and optionally further additives, such as for example metal fibers, to the mixture obtained in step 1 (step 2).

Alternatively, all or some of the additives can be added before, during or after the addition of water.

The additives normally supplied as a solution or suspension are preferably added together with water.

The mixing time and energy are suitably adapted so that the layered carbonaceous material is suitably dispersed in the binder or mixture. The electrically conductive binder in step 1 is preferably mixed for 1 minute at low speed (140 + 5 $min^{-1}$) and in step 2 for 5 minutes at low speed (140 $\pm$ 5 $min^{-1}$).

An optimal dispersion is facilitated by thorough mixing of the binder, for example by using high-energy mixing devices and/or by adjusting the mixing speed and/or mixing time. Mixers with a vertical or horizontal axis, both intensive and non-intensive, can be used. More suitable mixers are low-speed vertical shaft or planetary type mortar mixers (such as, for example Hobart mixers).

These devices ensure that no powder remains attached to the sides or bottom of the container and that the mixture is homogeneous and free of lumps.

The self-sensing concrete according to the present invention comprises a concrete structure and a cement mix consisting of an electrically conductive binder and water which can be applied to the surface of the concrete structure or integrated into the structure itself.

The cement mixture comprising the electrically conductive binder is applied/spread/distributed in a sort of formwork/compartment present on the surface of the structure having a thickness/depth ranging from 1 mm to 20 mm and preferably from 2 mm to 10 mm, a width depending on the size of the structure, generally from 3 cm to 20 cm and a length relative to that of the structure itself. Said formwork/compartment can be produced either by grooving the surface of the structure or by gluing adhesive strips having a thickness ranging from 1 mm to 20 mm, preferably from 2 mm to 10 mm, on the surface.

The cement mixture composed of an electrically conductive binder and water can be poured or spread depending on whether the application on the support (element of the structure to be monitored) is horizontal or vertical.

The layer of cement mixture composed of an electrically conductive binder and water created on the support of the structure to be monitored thus constitutes a simple electrical resistance, whose value varies according to the deformations and cracks that appear on the support.

In order to facilitate the connection between the layer of cement mix consisting of the electrically conductive binder and water applied on the surface of the structure and the electrical-resistance measuring instrument, copper or metal inserts are embedded at the end of the application of conductive product applied to the concrete structure or at predefined intervals of length, with characteristics similar to those of copper for facilitating the connection between the conductive product and the electrical-resistance measuring instrument.

The measurement can also be effected at a distance, from a few meters up to considerable distances depending on the type of network used. The electrical-resistance data can in fact be transmitted via cellular networks, e.g. GSM, GPRS, EDGE, UTMS, HSPA and LTE by wireless connection to collection stations for being analyzed. Through APP or PC software it is therefore possible to monitor instant by instant the deformation and cracking state of a structure, thus monitoring the safety status of the structure/s.

The cement mix comprising the electrically conductive binder and water is characterized by the following properties:

- consistency, measured according to the standard UNI 7044:1972, which ranges from 170 to 230 mm, preferably from 180 to 220 mm;
- density, measured according to the standard UNI EN 1015-4:2000, which ranges from 1,600 to 1,800 kg/m$^3$, preferably from 1,630 to 1,750 kg/m$^3$;
- compressive strength after 28 days of curing, measured according to the standard UNI EN 196-1:2016, which ranges from 10 to 20 MPa, preferably from 13 to 17 MPa;
- flexural strength after 28 days of curing, measured according to the standard UNI EN 196-1:2016, which ranges from 2.5 to 8 MPa, preferably from 3 to 6 MPa
- hydraulic shrinkage, measured according to the standard UNI 6687:1973 (modified using 1 cm-thick specimens), which ranges from 1,200 to 3,000 $\mu$m/mm, preferably from 1,600 to 2,500 $\mu$m/mm;
- the electrical resistivity of the cement mix comprising the electrically conductive binder and water was calculated by measuring the electrical resistance of a tile having dimensions of 23.5cm x 13.5cm x 0.9cm (length, width, thickness) produced with said cementitious mixture and applying Ohm's law, $\rho$ = R x (A/L). R is the electrical resistance Ohm [Q] measured at the length L of 23.5cm, A is the area of the section given by 13.5cm x 0.9cm. The electrical resistivity calculated ranges from 0.1 to 0.5 $\Omega$•m, preferably from 0.2 to 0.3 $\Omega$•m.

Further characteristics and advantages of the present invention will become more evident from the following detailed description of a preferred embodiment thereof, made with reference to the attached drawings. In said drawings:

- figure 1 presents a graph of the cylinder compression test cls 1-C60 which indicates the compressive stress and variation in electrical resistance during the tests up to collapse of the test specimens.
- figure 2 presents a graph of the cls-2-C110 cylinder compression test which shows the compressive stress and variation in electrical resistance during the tests up to collapse of the test specimens.
- figure 3 shows the graph of Test 2, compression test with loading and unloading cycles and final collapse of the cylindrical test-specimens according to EN 12390-3:2019 produced with cls1-C60, on which the cement mix including the electrically conductive binder was applied. The graph indicates the stress-compression cycles vs the actuation time until collapse of the test specimens.
- figures 4, 5 and 6 respectively show three graphs for three different concrete specimens showing the stress-compression cycles and the electrical-resistance variation during the whole test.
- figure 7 shows the graph of Test nr. 2, compression test with loading and unloading cycles and final collapse of the cylindrical specimens according to EN 12390-3:2019 produced with cls2-C110, on which the cement mix including the electrically conductive binder was applied. The graph shows the stress-compression cycles vs the actuation time until collapse of the test specimens.
- figures 8 and 9 describe the compression test with loading and unloading cycles and final collapse of the cylindrical test-specimens produced with cls2-C110 on which the cement mix including the electrically conductive binder was applied. The graph shows the compression stress cycles vs the electrical-resistance variation during the whole test.
- figure 10 shows the graph of Test nr. 3, bending test with loading and unloading cycles and final collapse of the prismatic test-specimens according to EN12390-5:2019 produced with cls1-C60, on which the cement mix including the electrically conductive binder was applied. The graph shows the stress-compression cycles vs the actuation time until collapse of the test specimens.
- figures 11 and 12 describe the results of the bending test with loading and unloading cycles and final collapse of the prisms produced with cls1-C60 on which the cement mix including the electrically conductive binder was applied. The graph shows the compression stress cycles vs the electrical-resistance variation during the whole test.
- figure 13 describes the graph of Test 3 relating to the bending test with loading and unloading cycles and final collapse according to 12390-5:2019 of the prisms produced with cls2-C110 on which the cement mix including the electrically conductive binder was applied. The graph shows the stress-compression cycles vs the actuation time until collapse of the test specimens.
- figures 14 and 15 describe the results of Test 3 relating to the bending test with loading and unloading cycles and final collapse of the prisms produced with cls2-C110 on which the cement mix including the electrically conductive binder was applied. The graph shows the compression stress cycles vs the electrical-resistance variation during the whole test.

- figures 16 and 17 are photographs of different embodiments of concrete supports/specimens on which the cement mix according to the present invention is applied/spread;
- figure 18 is a representation of the equipment used for Tests 1, 2 and 3.

Examples

By way of non-limiting example of the present invention, some examples of use of the electrically conductive binder according to the present invention are provided hereunder.

Non-limiting examples of the interaction between compression stress and variation in electrical resistance, between loading and unloading cycles of the compression stress and variation in electrical resistance and between cycles of flexural tensile stress and variation in electrical resistance are also indicated. These examples demonstrate the excellent electromechanical behavior of the electrically conductive binder according to the present invention during the plastic phase, hardening, the development of multiple microcracks and under stress in the final softening phase with localized fracture.

Example 1

Mixing of the electrically conductive binder without metal fibers.

The mixture was prepared in two steps.

Step 1: mixing the powder and paste components. The following components expressed as weight % with respect to the total weight of the electrically conductive binder, were introduced and mixed for 1 minute at low speed (140±5 $min^{-1}$) in the bowl of the Hobart planetary mixer:

- 59.94% by weight of CEM I 52.5R Portland cement in powder form;
- 36.71% by weight of Timrex M150 graphite (IMERYS) in powder form;
- 0.26% by weight (dry) of graphene G2Nan (NANESA) added as a paste.
- 0.03% by weight (0.05% by weight with respect to the weight of cement) of rheology modifier (functionalized cellulose) in powder form;
- 2.55% by weight (4.25% by weight with respect to the weight of cement) of expanding agent (overbaked calcium oxide) in powder form;
- 0.06% by weight (0.1% by weight with respect to the weight of cement) of defoamer (based on alkoxylated fatty alcohol and polysiloxanes) in powder form;

Step 2: Addition of liquid additives expressed as weight % of the total weight of the electrically conductive binder and water and mixing for 5 minutes at low speed (140±5 $min^{-1}$):

- 0.45% by dry weight (0.76% by weight with respect to the weight of the cement) of superplasticizer (polycarboxylate-ether copolymer with hydrophilic side chains - PCE) added as solution;
- addition of water to the electrically conductive binder to obtain a total water/cement weight ratio of 0.94.

The water/electrically conductive binder weight ratio is 0.56.

Example 2

Mixing of the electrically conductive binder with metal fibers.

The mixture was prepared in three steps.

Step 1: mixing the powder and paste components. The following components expressed as weight % with respect to the total weight of the electrically conductive binder, were introduced and mixed for 1 minute at low speed (140±5 $min^{-1}$) in the bowl of the Hobart planetary mixer:

- 55.96 % by weight of CEM I 52.5R Portland cement in powder form;
- 34.28 % by weight of Timrex M150 graphite (IMERYS) in powder form;

- 0.24% by weight (dry) of graphene G2Nan (NANESA) added as a paste.
- 0.21% by weight (0.37% by weight with respect to the weight of cement) of rheology modifier (UCS Pack, Sika) in powder form;
- 2.38% by weight (4.25% by weight with respect to the weight of cement) of expanding agent (overbaked calcium oxide) in powder form;
- 0.06% by weight (0.1% by weight with respect to the weight of cement) of defoamer (based on alkoxylated fatty alcohol and polysiloxanes) in powder form;

Step 2: Addition of liquid additives expressed as weight % of the total weight of the electrically conductive binder and water and mixing for 5 minutes at low speed ($140 \pm 5$ $min^{-1}$):

- 0.47% by dry weight (0.85% by weight with respect to the weight of the cement) of superplasticizer (polycarboxylate-ether copolymer with hydrophilic side chains) in liquid form;
- addition of water to the electrically conductive binder to obtain a total water/cement weight ratio of 0.94.

The water/electrically conductive binder weight ratio is 0.53.
Step 3: Addition of steel fibers expressed as weight % with respect to the total weight of the electrically conductive binder and mixing for 3 minutes at low speed ($140 \pm 5$ $min^{-1}$):

- 6.40% by weight of steel fibers DG 12.5/0.2 (KRAMPEHAREX).

Example 3

Application of the cement mix with an electrically conductive binder on concrete supports

The cement mix of the electrically conductive binder prepared in Example 1 was applied on two different types of support (cylindrical specimens and prismatic specimens) produced with two different classes of fiber-reinforced concrete, as described hereunder.
The cement mix layer of the electrically conductive binder and water was applied over the two types of support as follows:

- cylindrical specimens (diameter $\Phi$ 100 mm and height h 200 mm), size of the cement mix layer: width 1.5 cm, thickness 1.5 mm, length 170 mm;
- prismatic specimens (width 100 mm, height 100 mm, length 400 mm), size of the cement mix layer: width 3.0 cm, thickness 1.5 mm, length 370 mm.

The cement mix layers of the electrically conductive binder and water were positioned on the concrete specimens as follows:

- cylindrical-shaped specimens: the layer of cement mix of the electrically conductive binder and water were positioned along the generatrix and at a distance of 1.5 cm from the ends (base and vertex);
- prismatic-shaped specimens: the layer of cement mix of the electrically conductive binder and water were positioned on the long side of the prism, 1.5 cm away from the right and left ends and 7 cm away from the compressed area.

Preparation and construction of concrete supports/specimens for the application of the cement mix comprising the electrically conductive binder.

The first type of fiber-reinforced concrete (cls 1-C60) prepared for producing the cylindrical and prismatic supports/specimens was effected using the following composition

- 550 kg/$m^3$ of CEM II-A/LL 42.5R (i.work® TECNOCEM - Italcementi);
- 194 kg/$m^3$ of Calcareous Filler (0-0.1mm);
- 865 kg/$m^3$ of natural sand (0-4mm);
- 546 kg/$m^3$ of natural crushed stone (2-16 mm);
- 7.3 kg/$m^3$ of SIKA ViscoCrete 5370 acrylic superplasticizer additive;
- 1% by volume of hooked steel fibers 30 mm long, 0.5 mm in diameter and a tensile strength of 2,000MPa;
- 181.5 l/$m^3$ of water.

The first concrete was prepared using a horizontal axis mixer such as a construction-site cement mixer, into which the aggregates (sand and crushed stone) and cement were introduced. After mixing for 2 minutes, ¾ of the mixing water was added and mixing was continued for a further 2 minutes. Continuing the mixing for a further 2 minutes, the rest of the water and the superplasticizer were subsequently added: finally the steel fibers were added and the mixing was carried out for a further 3 minutes.

The physical-mechanical characteristics of this first fiber-reinforced concrete (cls1-C60) are indicated in the following Table 1:

**Table 1**

| Determinations - els 1-C60 | Unity of measurement | Values |
|---|---|---|
| Compression strength @ 1 day (EN 12390-3) | MPa | 43 |
| Compression strength @ 7 days (EN 12390-3) | MPa | 65 |
| Compression strength @ 28 days (EN 12390-3) | MPa | 70 |
| Flexural strength @ 1gg (EN 12390-3) | MPa | 6.9 |
| Flexural strength @ 28gg (EN 12390-3) | MPa | 12.1 |
| Dynamic elastic modulus @ 28 days (Internal method) | MPa | 38562 |

The second type of fiber-reinforced concrete (cls2-C110) prepared for producing the cylindrical and prismatic supports/specimens were created using the following composition:

- 580 kg/m$^3$ of CEM I 52.5R (i.work® TECNOCEM - Italcementi);
- 280 kg/m$^3$ of Mineral Additives Type II - blast furnace slag;
- 319 kg/m$^3$ of natural silica Sand (0-0.6 mm);
- 314 kg/m$^3$ of natural silica Sand (0.5-0.8 mm);
- 251 kg/m$^3$ of natural silica Sand (1.5-3 mm);
- 8.1 kg/m$^3$ of Superplasticizer with side chains based on polyethylene glycol Melflux 2651F - Basf
- 1.5 by volume of straight steel Fibers with an aspect ratio of 65 - Dramix;
- 189 l/m$^3$ of water.

The second concrete (cls2-C110) was prepared in a horizontal axis mixer such as a construction-site cement mixer, into which aggregates (mineral additions and sand) and cement were introduced. After mixing for 2 minutes, ¾ of the mixing water was added and mixing was continued for a further 2 minutes. Continuing the mixing for a further 2 minutes, the rest of the water and the superplasticizer were subsequently added: finally the steel fibers were added and the mixing was carried out for a further 3 minutes.

The physical-mechanical characteristics of the second fiber-reinforced concrete (cls 2-C110) are indicated in the following Table 2:

**Table 2**

| Determinations - els 2-C110 | Unity of measurement | Values |
|---|---|---|
| Compression strength @ 1 day (EN 196-1) | MPa | 60 |
| Compression strength @ 7 days (EN 196-1) | MPa | 90 |
| Compression strength @ 28 days (EN 196-1) | MPa | 110 |
| Flexural strength @ 1dav (EN 196-1) | MPa | 10 |
| Flexural strength @ 28days (EN 196-1) | MPa | 16 |
| Dynamic elastic modulus @ 28 days (Internal method) | MPa | 39400 |

Preparation of concrete supports/specimens

The concretes (Cls1-C60 and Cls2-C110) produced in the laboratory at a temperature of 20 ± 2°C were used for manufacturing the cylindrical (Φ100 mm x h 200 mm) and prismatic (1 100 mm x h 100 mm x d 100 mm) specimens.

The specimens, once cast, were covered with a plastic sheet for 24 hours and, after demoulding, they were cured in a climatic chamber at 20 ± 2°C and 95% relative humidity for 27 days.

At the end of the curing, the specimens were removed from the climatic chamber and the formworks/compartments for the application/spreading/distribution of the cement mix of the electrically conductive binder having the previously specified dimensions were constructed on the surface of the same.

Each individual formwork/compartment where the cement mixture of the electrically conductive binder was to be spread was created on the surface to be controlled of each specimen by gluing an adhesive tape 1.5 mm thick and 1.5 cm wide (figures 16 and 17).

The connection between the cement mixture of the electrically conductive binder and the electrical-resistance measurement instrument was facilitated by embedding the head of a small piece of copper cable with a diameter of Φ 1 mm and a length of 10 cm at the end of each layer of cement mixture of the electrically conductive binder.

A quantity of cement mix of the electrically conductive binder was applied to each specimen which was such as to fill the formwork/space created with the adhesive tape and, before the mix hardened, a tip of cable suitable for connection with the measurement instrument was embedded for each end.

The specimens to which the layer of cement mix of the electrically conductive binder had been applied were cured in a climatic chamber at 20 ± 2°C and 95% relative humidity for 27 days, and were subsequently tested.

Description of tests carried out with concrete supports/specimens to which the cement mix comprising the electrically conductive binder was applied.

The tests carried out on these specimens and subsequently described showed that the use of a simple layer of cement mix of the electrically conductive binder transformed a normal concrete into a self-sensing concrete. The specimens produced with both types of concrete and having the layer of cement mix of the electrically conductive binder applied on the surface were tested as specified hereunder:

- Test 1: compression test (EN12390-3:2019) on cylindrical specimens;
- Test 2: compression test with loading and unloading cycles and compression until final collapse (EN 12390-3:2019) on cylindrical specimens;
- Test 3: flexural traction test with loading and unloading cycles and loading until final failure (EN 12390-5:2019) on prismatic specimens.

For all the tests effected (1-2-3), time, load and the variation in the electrical resistance of the layer of cementitious mixture of the electrically conductive binder were monitored.

Description of the equipment used for Tests 1, 2 and 3.

The compression tests were carried out with CONTROLS ADVANTEST-8 equipment. The load cell installed is 3000 KN and the increase rate of the load set for the compression test is equal to 0.5 ± 0.05 MPals. The vertical axis of the piston coincides with the vertical axis of the machine and during loading the movement direction of the piston is along the vertical axis of the machine. Furthermore, the resultant of the forces passes through the centre of the specimen (Figure 18).

The surface of the lower plate of the machine is perpendicular to the axis of the machine and remains perpendicular during the loading phase. The upper plate of the machine receives the load through an intermediate spherical seat and is capable of sliding vertically without significant friction in the frame which guides its movement.

The same CONTROLS ADVANTEST 8 equipment with a 3000 KN load cell, used for the tests with compression cycles and subsequent collapse, is also used for the compression test, the only difference being that the rate of increase of the load was set at 0.25 ± 0.05 MPals.

The equipment used for the four-point flexural tensile cycle tests is a CONTROLS ADVANTEST 8 with a frame that mounts a 150 KN load cell and the increase rate of the load was set at 0.05 ± 0.005 MPals. The frame (Figure 19) which applies the loads consists of:

1) two support rollers;
2) two upper rollers carried by an articulated crosspiece which equally distributes the load applied by the machine between the two rollers.

All the rollers are made of steel and have a circular cross-section with a diameter ranging from 20 mm to 40 mm, finally they are 10 mm longer than the width of the specimen. The prismatic specimens are subjected to a bending moment for the application of the load through the upper and lower rolls.

The monitoring of the electrical-resistance variation of the layer of cement mix of the electrically conductive binder during each test was performed by connecting a DATA TAKKER DT80 continuous electrical-resistance meter (data logger) to the small pieces of copper cable embedded at the end of the cement mix of the electrically conductive binder.

Description Test-1, compression test on cylinders

Compression tests on the cylindrical concrete supports/specimens were carried out in duplicate for each type of concrete, (Cls1-C60 and Cls2-C110) and showed that the layer of cement mix of the electrically conductive binder applied on them is sensitive to the deformations induced by compressive stress: as the load and therefore the compressive stress increases, in fact, the electrical resistance of the cement mixture of the electrically conductive binder also increases, regardless of the type of support.

The cylindrical specimens, suitably prepared for the compression test, were positioned in the frame of the CONTROLS ADVANTEST 8, connected to the DATA TAKKER DT 80 by means of the small pieces of copper cable embedded at the end of the cement mix of the electrically conductive binder and the test was carried out until collapse. The results obtained are indicated in the following tables 3 and 4:

**Table 3**

| **Test 1**: **Compression-test cylinders made with cls 1-C60** | | | |
|---|---|---|---|
| Increase in Compressive Stress [σ] vs Variation in Electrical-Resistance [Ω] | | | |
| **specimen C60ECC -1** | | **specimen C60ECC -2** | |
| Stress σ | Electrical resistance | Stress σ | Electrical resistance |
| [MPa] | [Ω] | [MPa] | [Ω] |
| 5 | 105.61 | 5 | 99.6 |
| 10 | 106.7 | 10 | 101.8 |
| 15 | 109.51 | 15 | 103.7 |
| 20 | 110.9 | 20 | 104.9 |
| 25 | 112.5 | 25 | 107.1 |
| 30 | 116.28 | 30 | 108.5 |
| 35 | 118.37 | 35 | 110.4 |
| 40 | 120.43 | 40 | 112.2 |
| 45 | 123.35 | 45 | 115.1 |
| 50 | 124.96 | 50 | 116.8 |
| 53 | 127.17 | 53 | 119.3 |
| 55 | 129.68 | 55 | 120.5 |
| 57 | 128.39 | 57 | 120.7 |
| 60 | 131.77 | 60 | 123.2 |
| 63 | 130.37 | 63 | 123.7 |
| 65 | 134.47 | 65 | 124.5 |
| 66 | 135.12 | 66 | 131.8 |

**Table 4**

| Test 1: **Compression-test cylinders made with cls 2-C110** | | | |
|---|---|---|---|
| Increase in Compressive Stress [σ] vs Variation in Electrical Resistance [Ω] | | | |
| **specimen C110ECC -1** | | **specimen C110ECC -2** | |
| Stress σ | Electrical resistance | Stress σ | Electrical resistance |
| [MPa] | [Ω] | [MPa] | [Ω] |
| 5 | 631,3 | 5 | 295 |
| 10 | 645 | 10 | 327 |
| 15 | 668 | 15 | 305 |
| 20 | 701 | 20 | 328 |
| 25 | 745 | 25 | 355 |
| 30 | 776 | 30 | 403 |
| 35 | 722 | 35 | 371 |
| 40 | 662 | 40 | 437 |
| 45 | 796 | 45 | 417 |
| 50 | 818 | 50 | 345 |
| 53 | 833 | 53 | 399 |
| 55 | 855 | 55 | 404 |
| 57 | 866 | 57 | 467 |
| 60 | 870 | 60 | 416 |
| 65 | 907 | 65 | 434 |
| 67 | 909 | 67 | 427 |
| 70 | 903 | 70 | 413 |
| 73 | 879 | 73 | 338 |
| 75 | 911 | 75 | 426 |
| 77 | 933 | 77 | 418 |
| 80 | 960 | 80 | 453 |
| 83 | 882 | 83 | 493 |
| 85 | 939 | 85 | 450 |
| 87 | 1097 | 87 | 488 |
| 90 | 1108 | 90 | 501 |
| 93 | 1107 | 93 | 501 |
| 95 | 1109 | 95 | 482 |
| 97 | 1136 | 97 | 583 |

The results of the compression tests on the specimens made with cls1-C60, monitored through the variation in electrical resistance, are also shown in the graph in figure 1, whereas the results of the compression tests on the specimens made with cls2-C110, monitored through the variation in electrical resistance, are also shown in the graph in figure 2.

These graphs allow a reliable correlation to be detected between the mechanical resistance in the various points of the structure and the electrical-resistance values measured on the layer of cement mix of the electrically conductive binder on the concrete supports.

Description Test 2 with loading/unloading cycles under compression and loading until final collapse

The following tests showed that the layer of cement mix of the electrically conductive binder on concrete supports made with the two types of concrete cls1-C60 and cls2-C110, in addition to being sensitive to the continuous deformation that takes place during the compression test, is also sensitive to loading and unloading cycles with a subsequent increase in the load up to the collapse of the specimen itself.

The tests with compression cycles and subsequent compression until collapse for both types of support were set up on the CONTROLS ADVANTEST 8 machine according to the following scheme

**Table 5**

| Test 2, Calculation of the loading and unloading cycles for the Cylinder Compression test | | | | | |
|---|---|---|---|---|---|
| Step | Description | σ to be reached per step | Increase σ [MPa/s] | $\sigma_i$ Values [MPa] | Holding time [s] |
| 0 | Loading | $\sigma_0$ | 0.025 ± 0.005 | $\sigma_0 \leq \frac{1}{10} (\frac{1}{3} \sigma_{max})$ | - |
| 1 | Holding | $\sigma_0$ | - | $\sigma_0 \leq \frac{1}{10} (\frac{1}{3} \sigma_{max})$ | 60 |
| 2 | Loading | $\sigma_1$ | 0.025 ± 0.005 | $\sigma_1 = \frac{1}{3} (\frac{1}{3} \sigma_{max})$ | - |
| 3 | Holding | $\sigma_1$ | - | $\sigma_1 = \frac{1}{3} (\frac{1}{3} \sigma_{max})$ | 60 |
| 4 | Unloading | $\sigma_0$ | 0.025 ± 0.005 | $\sigma_0 \leq \frac{1}{10} (\frac{1}{3} \sigma_{max})$ | - |
| 5 | Holding | $\sigma_0$ | - | $\sigma_0 \leq \frac{1}{10} (\frac{1}{3} \sigma_{max})$ | 60 |
| 6 | Loading | $\sigma_2$ | 0.025 ± 0.005 | $\sigma_2 = \frac{2}{3} (\frac{1}{3} \sigma_{max})$ | - |
| 7 | Holding | $\sigma_2$ | - | $\sigma_2 = \frac{2}{3} (\frac{1}{3} \sigma_{max})$ | 60 |
| 8 | Unloading | $\sigma_0$ | 0.025 ± 0.005 | $\sigma_0 \leq \frac{1}{10} (\frac{1}{3} \sigma_{max})$ | - |

(continued)

| Test 2, Calculation of the loading and unloading cycles for the Cylinder Compression test | | | | | |
|---|---|---|---|---|---|
| Step | Description | $\sigma$ to be reached per step | Increase $\sigma$ [MPa/s] | $\sigma_i$ Values [MPa] | Holding time [s] |
| 9 | Holding | $\sigma_0$ | - | $\sigma_0 \leq \frac{1}{10} (\frac{1}{3} \sigma_{max})$ | 60 |
| 10 | Loading | $\sigma_3$ | 0.025 ± 0.005 | $\sigma_3 = \frac{3}{3} (\frac{1}{3} \sigma_{max})$ | - |
| 11 | Holding | $\sigma_3$ | - | $\sigma_3 = \frac{3}{3} (\frac{1}{3} \sigma_{max})$ | 60 |
| 12 | Unloading | $\sigma_0$ | 0.025 ± 0.005 | $\sigma_0 \leq \frac{1}{10} (\frac{1}{3} \sigma_{max})$ | - |
| 13 | Holding | $\sigma_0$ | - | $\sigma_0 \leq \frac{1}{10} (\frac{1}{3} \sigma_{max})$ | 60 |
| 14 | Loading until collapse | $\sigma_{collapse}$ | 0.025 ± 0.005 | $\sigma_{max}$ | Time necessary for collapse |

Description of tests with compression cycles and loading until final collapse on specimens made with 1-C60 concrete

The values obtained with compression cycles for the cls1-C60 concrete specimens are shown in the following Table 6 and are also represented in the graph in figure 3.

**Table 6**

| Test 2, Stress values $\sigma_i$ for tests with loading and unloading cycles | | | | |
|---|---|---|---|---|
| **Code of specimens made with cls 1-C60** | | **C60ECC-EM1** | **C60ECC-EM2** | **C60ECC-EM3** |
| Max loading | [KN] | 517.7 | 517.7 | 517.7 |
| Compression strength $f_c$ | [MPa] | 66.0 | 66.0 | 66.0 |
| Basic stress $\sigma_0$ | [MPa] | 2 | 2 | 2 |
| Stress $\sigma_1$ | [MPa] | 10 | 10 | 10 |
| Stress $\sigma_2$ | [MPa] | 16 | 16 | 16 |
| Stress $\sigma_3$ | [MPa] | 22 | 22 | 22 |

The values obtained in three different tests on cylindrical specimens made with cls1-C60 and tested with compression cycles and subsequent compression until collapse, are indicated in the following Table 7 and are represented in the graphs of figures 4, 5 and 6.

**Table 7**

| Test 2, Electrical-Resistance Values read during each step of the compression loading and unloading cycles of cylindrical specimens C60ECC | | | | | | |
|---|---|---|---|---|---|---|
| **Determination** | **Step** | | **Ud m** | **C60ECC-EM1** | **C60ECC-EM2** | **C60ECC-EM3** |
| Electrical Resistance | step 0 | 0 -> $\sigma_0$ | [Ω] | 122.2 ÷ 122,5 | 87.2 ÷ 89,9 | 101.2 ÷ 101.5 |
| | step 1 | $\sigma_0$ | [Ω] | 122.5 ÷ 127,1 | 89.9 ÷ 89,9 | 101.5 ÷ 104.0 |
| | step 2 | $\sigma_0$ -> $\sigma_1$ | [Ω] | 127.1 ÷ 128,5 | 89.9 ÷ 90,2 | 104.0 ÷ 104.8 |
| | step 3 | $\sigma_1$ | [Ω] | 128.5 ÷ 129,4 | 90.2 ÷ 90,3 | 104.8 ÷ 105.6 |
| | step 4 | $\sigma_1$ -> $\sigma_0$ | [Ω] | 129.4 ÷ 129,7 | 90.3 ÷ 91,0 | 105.6 ÷ 105.6 |
| | step 5 | $\sigma_0$ | [Ω] | 129.7 ÷ 129,7 | 91.0 ÷ 90,6 | 105.6 ÷ 105.4 |
| | step 6 | $\sigma_0$ -> $\sigma_2$ | [Ω] | 129.7 ÷ 129,9 | 90.6 ÷ 91,1 | 105.4 ÷ 106.0 |
| | step 7 | $\sigma_2$ | [Ω] | 129.9 ÷ 131,6 | 91.1 ÷ 91,1 | 106.0 ÷ 107.4 |
| | step 8 | $\sigma_2$ -> $\sigma_0$ | [Ω] | 131.6 ÷ 131,1 | 91.1 ÷ 90,4 | 107.4 ÷ 107.9 |
| | step 9 | $\sigma_0$ | [Ω] | 131.1 ÷ 130,0 | 90.4 ÷ 91,0 | 107.9 ÷ 106.2 |
| | step 10 | $\sigma_0$ -> $\sigma_3$ | [Ω] | 130.1 ÷ 131,8 | 91.0 ÷ 91,8 | 106.2 ÷ 107.0 |
| | step 11 | $\sigma_3$ | [Ω] | 131.8 ÷ 131,8 | 91.8 ÷ 92,8 | 107.0 ÷ 108.7 |
| | step 12 | $\sigma_3$ -> $\sigma_0$ | [Ω] | 131.8 ÷ 131,3 | 92.8 ÷ 91,8 | 108.7 ÷ 109.7 |
| | step 13 | $\sigma_0$ | [Ω] | 131.3 ÷ 130,5 | 91.8 ÷ 91,8 | 109.7 ÷ 108.1 |
| | step 14 | $\sigma_0$ -> $\sigma_4$ | [Ω] | 130.5 ÷ 153,1 | 91.8 ÷ 108,1 | 108.1 ÷ 125.2 |

Description Test 2 with compression loading and unloading cycles and loading until final collapse on specimens made with 2-C110 concrete

Test 2 with loading and unloading cycles under compression with the specimens made with cls2-C110 were set up on the CONTROLS ADVANTEST 8 machine according to the criteria indicated in Table 5, the values obtained are shown in the following Table 8 and also represented in the graph of figure 7:

**Table 8**

| Test 2, Stress values $\sigma_i$ for tests with loading-unloading cycles under compression | | | |
|---|---|---|---|
| **Code for specimens made with cls2-C110** | | **C110ECC-EM1** | **C110ECC-EM2** |
| Max loading | [KN] | 761.5 | 761.5 |
| Compression strength $\mathbf{f_c}$ | [MPa] | 96.9 | 96.9 |
| Basic stress $\sigma_0$ | [MPa] | 2 | 2 |
| Stress $\sigma_1$ | [MPa] | 20 | 20 |
| Stress $\sigma_2$ | [MPa] | 26 | 26 |
| Stress $\sigma_3$ | [MPa] | 32 | 32 |

The values obtained in three different tests on cylindrical specimens made with Cls2 and tested with compression cycles and subsequent collapse, are indicated in the following Table 9 and are represented in the graphs of figures 8 and 9.

**Table 9**

| Test 2, Electrical-Resistance Values read during each step of the loading and unloading cycles under compression of cylindrical specimens C110ECC | | | | | |
|---|---|---|---|---|---|
| **Determinations** | **Step** | | **Ud m** | **C110ECC-EM1** | **C110ECC-EM2** |
| Electrical Resistance | step 0 | $0 \to \sigma_0$ | [Ω] | 174.1 ÷ 175.9 | 248.1 ÷ 247.8 |
| | step 1 | $\sigma_0$ | [Ω] | 175.9 ÷ 175.8 | 247.8 ÷ 247.9 |
| | step 2 | $\sigma_0 \to \sigma_1$ | [Ω] | 175.8 ÷ 208.0 | 247.9 ÷ 256.1 |
| | step 3 | $\sigma_1$ | [Ω] | 280.0 ÷ 206.2 | 256.1 ÷ 256.1 |
| | step 4 | $\sigma_1 \to \sigma_0$ | [Ω] | 206.2 ÷ 210.3 | 256.1 ÷ 263.8 |
| | step 5 | $\sigma_0$ | [Ω] | 210.3 ÷ 210.2 | 263.8 ÷ 262.9 |
| | step 6 | $\sigma_0 \to \sigma_2$ | [Ω] | 210.2 ÷ 208.5 | 262.9 ÷ 264.6 |
| | step 7 | $\sigma_2$ | [Ω] | 208.5 ÷ 209.1 | 264.6 ÷ 265.9 |
| | step 8 | $\sigma_2 \to \sigma_0$ | [Ω] | 209.1 ÷ 229.7 | 265.9 ÷ 278.9 |
| | step 9 | $\sigma_0$ | [Ω] | 229.7 ÷ 228.7 | 278.9 ÷ 278.9 |
| | step 10 | $\sigma_0 \to \sigma_3$ | [Ω] | 228.7 ÷ 221.8 | 278.9 ÷ 281.2 |
| | step 11 | $\sigma_3$ | [Ω] | 221.8 ÷ 224.9 | 281.2 ÷ 281.4 |
| | step 12 | $\sigma_3 \to \sigma_0$ | [Ω] | 224.9 ÷ 245.0 | 281.4 ÷ 301.5 |
| | step 13 | $\sigma_0$ | [Ω] | 245.0 ÷ 243.3 | 301.5 ÷ 301.1 |
| | step 14 | $\sigma_0 \to \sigma_4$ | [Ω] | 243.3 ÷ 307.1 | 301.1 ÷ 376.2 |

Description Test 3 with flexural loading and unloading cycles and loading until final failure

The flexural tensile tests on the prismatic concrete specimens were carried out in duplicate for each type of concrete, (cls1-C60 and cls2-C110) and showed that the layer of cement mix of the electrically conductive binder applied on them is also sensitive to the deformations induced by tensile stress, whether they take place with loading/unloading cycles or by imposing them continuously until the support collapses.

The parameters of the tests with bending cycles and subsequent collapse for both types of support (cls1-C60 and cls2-C110) were set on the CONTROLS ADVANTEST 8 machine according to the following diagram:

**Table 10**

| Test 3, **Calculation of loading and unloading cycles with bending** | | | | | |
|---|---|---|---|---|---|
| Step | Description | σf to be reached per step | σ Increase [MPa/s] | $\sigma_i$ Values [MPa] | Holding time [s] |
| 0 | Loading | $\sigma f_0$ | 0.05 ±0.005 | $\sigma_0 \leq \frac{1}{6}\ (\frac{1}{3}\ \sigma_{max})$ | - |
| 1 | Holding | $\sigma f_0$ | - | $\sigma_0 \leq \frac{1}{6}\ (\frac{1}{3}\ \sigma_{max})$ | 60 |
| 2 | Loading | $\sigma f_1$ | 0.05 ±0.005 | $\sigma_1 = (\frac{1}{3}\ \sigma_{max})$ | - |

(continued)

| Test 3, **Calculation of loading and unloading cycles with bending** | | | | | |
|---|---|---|---|---|---|
| Step | Description | σf to be reached per step | σ Increase [MPa/s] | $\sigma_i$ Values [MPa] | Holding time [s] |
| 3 | Holding | $\sigma f_1$ | - | $\sigma_1 = (\frac{1}{3}\sigma_{max})$ | 60 |
| 4 | Unloading | $\sigma f_0$ | 0.05 ±0.005 | $\sigma_0 \leq \frac{1}{6}(\frac{1}{3}\sigma_{max})$ | - |
| 5 | Holding | $\sigma f_0$ | - | $\sigma_0 \leq \frac{1}{6}(\frac{1}{3}\sigma_{max})$ | 60 |
| 6 | Loading | $\sigma f_2$ | 0.05 ±0.005 | $\sigma_2 = (\frac{1}{3}\sigma_{max})$ | - |
| 7 | Holding | $\sigma f_2$ | - | $\sigma_2 = (\frac{1}{3}\sigma_{max})$ | 60 |
| 8 | Unloading | $\sigma f_0$ | 0.05 ±0.005 | $\sigma_0 \leq \frac{1}{6}(\frac{1}{3}\sigma_{max})$ | - |
| 9 | Holding | $\sigma f_0$ | - | $\sigma_0 \leq \frac{1}{6}(\frac{1}{3}\sigma_{max})$ | 60 |
| 10 | Loading | $\sigma f_3$ | 0.05 ±0.005 | $\sigma_3 = (\frac{1}{3}\sigma_{max})$ | - |
| 11 | Holding | $\sigma f_3$ | - | $\sigma_3 = (\frac{1}{3}\sigma_{max})$ | 60 |
| 12 | Unloading | $\sigma f_0$ | 0.05 ±0.005 | $\sigma_0 \leq \frac{1}{6}(\frac{1}{3}\sigma_{max})$ | - |
| 13 | Holding | $\sigma f_0$ | - | $\sigma_0 \leq \frac{1}{6}(\frac{1}{3}\sigma_{max})$ | 60 |
| 14 | Loading until collapse | $\sigma_{collapse}$ | 0.05 ±0.005 | $\sigma_{max}$ | Time necessary for collapse |

Description Test 3 with flexural loading and unloading cycles and flexural loading until final failure on prisms made with cls1-C60

The data for setting the CONTROLS ADVANTEST 8 equipment, calculated on the basis of the criteria shown in the previous Table 10, are indicated in the following Table 11 and represented in the graph in figure 10.

**Table 11**

| Test 3, Stress values σfi for flexural loading and unloading cycles for C60ECC prisms | | | |
|---|---|---|---|
| **Code of specimens made with cls1-C60** | | **C60ECC-FC1** | **C60ECC-FC2** |
| Average max loading | [KN] | 45.24 | 45.24 |
| Flexural strength $f_c$ | [MPa] | 13.57 | 13.57 |
| Basic stress $\sigma f_0$ | [MPa] | 0.8 | 0.8 |
| Stress $\sigma_{f1}$ | [MPa] | 4.52 | 4.52 |
| Stress $\sigma_{f2}$ | [MPa] | 4.52 | 4.52 |
| Stress $\sigma_{f3}$ | [MPa] | 4.52 | 4.52 |

The values obtained with the two prismatic specimens made with cls1-C60 are shown in the following Table 12 and are also represented in the graphs of figures 11 and 12.

**Table 12**

| Test 3, Electrical-resistance values read during each step of flexural loading and unloading cycles and subsequent collapse of Cls 1 prisms | | | | | |
|---|---|---|---|---|---|
| **Determinations** | **Step** | | **Udm** | **C60ECC-CF1** | **C60ECC-CF2** |
| Electrical Resistance | step 0 | $0 \rightarrow \sigma_{c0}$ | [Ω] | 808.5 ÷ 812.3 | 421.0 ÷ 421.1 |
| | step 1 | $\sigma_{c0}$ | [Ω] | 812.3 ÷ 812.8 | 421.1 ÷ 421.1 |
| | step 2 | $\sigma_{c0} \rightarrow \sigma_{c1}$ | [Ω] | 812.8 ÷ 792.1 | 421.0 ÷ 421.1 |
| | step 3 | $\sigma_{c1}$ | [Ω] | 792.1 ÷ 797.5 | 421.1 ÷ 421.2 |
| | step 4 | $\sigma_{c1} \rightarrow \sigma_{c0}$ | [Ω] | 797.5 ÷ 803.1 | 421.2 ÷ 423.1 |
| | step 5 | $\sigma_{c0}$ | [Ω] | 803.1 ÷ 803.4 | 423.1 = 423.5 |
| | step 6 | $\sigma_{c0} \rightarrow \sigma_{c2}$ | [Ω] | 803.4 ÷ 790.3 | 423.5 ÷ 421.7 |
| | step 7 | $\sigma_{c2}$ | [Ω] | 790.3 ÷ 791.5 | 421.7 ÷ 421.2 |
| | step 8 | $\sigma_{c2} \rightarrow \sigma_{c0}$ | [Ω] | 791.5 ÷ 798.4 | 421.2 ÷ 422.0 |
| | step 9 | $\sigma_{c0}$ | [Ω] | 798.4 ÷ 790.1 | 422.0 ÷ 422.5 |
| | step 10 | $\sigma_{c0} \rightarrow \sigma_{c3}$ | [Ω] | 790.1 ÷ 791.3 | 422.5 ÷ 422.9 |
| | step 11 | $\sigma_{c3}$ | [Ω] | 791.3 ÷ 794.8 | 422.9 ÷ 422.5 |
| | step 12 | $\sigma_{c3} \rightarrow \sigma_{c0}$ | [Ω] | 794.8 ÷ 797.1 | 422.5 ÷ 422.2 |
| | step 13 | $\sigma_{c0}$ | [Ω] | 797.1 ÷ 794.2 | 422.2 ÷ 422.6 |
| | step 14 | $\sigma_{c0} \rightarrow \sigma_{c4}$ | [Ω] | 794.2 ÷ 895.8 | 422.6 ÷ 665.3 |

Description test with flexural loading and unloading cycles and final collapse on prismatic specimens made with cls2-C110

The data for setting the CONTROLS ADVANTEST 8 equipment, calculated on the basis of the criteria shown in the previous Table 10, are indicated in the following Table 13 and represented in the graph of figure 13.

**Table 13**

| Test 3, Stress values σfi for flexural loading and unloading cycles for C110ECC prisms | | | |
|---|---|---|---|
| **Code of specimens made with cls2-C110** | | **C110ECC-CF1** | **C110ECC-CF2** |
| Average max loading | [KN] | 49.49 | 49.49 |
| Flexural strength $f_c$ | [MPa] | 14.85 | 14.85 |
| Basic stress $\sigma f_0$ | [MPa] | 1.0 | 1.0 |
| Stress $\sigma_{f1}$ | [MPa] | 4.75 | 4.75 |
| Stress $\sigma_{f2}$ | [MPa] | 4.75 | 4.75 |
| Stress $\sigma_{f3}$ | [MPa] | 4.75 | 4.75 |

The data obtained with the two prismatic specimens made with cls2-110 are shown in the following Table 14 and represented in the graphs of figures 14 and 15.

**Table 14**

| Test 3, Electrical-resistance values read during each step of the flexural loading and unloading cycles and subsequent collapse of prisms cls2-C110 | | | | | |
|---|---|---|---|---|---|
| **Determinations** | **Step** | | **Ud m** | **C110ECC-CF1** | **C110ECC-CF2** |
| Electrical Resistance | step 0 | $0 \rightarrow \sigma_0$ | [Ω] | 408.2 ÷ 412.3 | 345.4 ÷ 345.5 |
| | step 1 | $\sigma_0$ | [Ω] | 412.3 ÷ 413.7 | 345.5 ÷ 345.2 |
| | step 2 | $\sigma_0 \rightarrow \sigma_1$ | [Ω] | 413.7 ÷ 405.4 | 345.2 ÷ 344.1 |
| | step 3 | $\sigma_1$ | [Ω] | 405.4 ÷ 403.4 | 344.1 ÷ 344.4 |
| | step 4 | $\sigma_1 \rightarrow \sigma_0$ | [Ω] | 403.4 ÷ 394.9 | 344.4 ÷ 345.8 |
| | step 5 | $\sigma_0$ | [Ω] | 397.9 ÷ 397.6 | 345.8 ÷ 345.1 |
| | step 6 | $\sigma_0 \rightarrow \sigma_2$ | [Ω] | 397.6 ÷ 404.7 | 345.1 ÷ 344.6 |
| | step 7 | $\sigma_2$ | [Ω] | 404.7 ÷ 405.2 | 344.6 ÷ 344.7 |
| | step 8 | $\sigma_2 \rightarrow \sigma_0$ | [Ω] | 405.2 ÷ 410.1 | 344.7 ÷ 344.9 |
| | step 9 | $\sigma_0$ | [Ω] | 410.1 ÷ 410.6 | 344.9 ÷ 344.9 |
| | step 10 | $\sigma_0 \rightarrow \sigma_3$ | [Ω] | 410.6 ÷ 411.2 | 344.9 ÷ 344.5 |
| | step 11 | $\sigma_3$ | [Ω] | 411.2 ÷ 411.3 | 344.5 ÷ 344.8 |
| | step 12 | $\sigma_3 \rightarrow \sigma_0$ | [Ω] | 411.3 ÷ 413.3 | 344.8 ÷ 344.8 |
| | step 13 | $\sigma_0$ | [Ω] | 413.3 ÷ 413.8 | 344.8 ÷ 344.4 |
| | step 14 | $\sigma_0 \rightarrow \sigma_4$ | [Ω] | 413.8 ÷ 564.7 | 344.4 ÷ 376.2 |

In conclusion, the previous tests demonstrate that the variations in electrical resistance detected by the measuring instrument on the layer of cement mix of the electrically conductive binder on the concrete supports are adequately correlated with the variations in mechanical resistance or with the variations in tensile stress of the specimens themselves.

These data therefore allow it to be concluded that the use of the electrically conductive binder for monitoring the deformation and cracking state of concrete structures according to the present invention allows continuous monitoring to be carried out in a particularly simple and effective way, overcoming the drawbacks of the prior art.

## Claims

1. Use of an electrically conductive binder for monitoring the deformation and cracking state of concrete structures, such as, for example, bridges, viaducts, pylons, etc., wherein said electrically conductive binder comprises the following components:

- cement in a quantity ranging from 40 to 80%, preferably from 45 to 70%, more preferably from 50 to 65%, expressed as a weight % with respect to the total weight of the electrically conductive binder;
- graphite in a quantity ranging from 19.5 to 60%, preferably from 25 to 50%, more preferably from 30 to 40%, expressed as a weight % with respect to the total weight of the electrically conductive binder, said graphite having a carbon content by weight ranging from 45% to 100% with respect to the total weight of the graphite;
- graphene (calculated as dry matter) in a quantity ranging from 0 to 0.5%, preferably from 0.005 to 0.4%, more preferably from 0.2 to 0.3% expressed as a weight % with respect to the total weight of the electrically conductive binder;
- metal fibers, preferably steel, in a quantity ranging from 0 to 15%, preferably from 4 to 8%, expressed as a weight % with respect to the total weight of the electrically conductive binder;
- at least one superplasticizer (calculated as dry matter) in a quantity ranging from 0 to 2%, preferably from 0.45 to 1%, expressed a weight % with respect to the total weight of the electrically conductive binder;
- at least one rheology modifier (calculated as dry matter) in a quantity ranging from 0 to 0.9%, preferably from 0.03 to 0.6%, expressed as a weight % with respect to the total weight of the electrically conductive binder;
- at least one expansive mineral agent in a quantity ranging from 0 to 9%, preferably from 2 to 7%, expressed as a weight % with respect to the total weight of the electrically conductive binder;
- at least one defoamer (calculated as dry matter) in a quantity ranging from 0 to 0.3%, preferably from 0.05 to 0.2%, expressed as a weight % with respect to the total weight of the electrically conductive binder, wherein the sum of all the components present in said electrically conductive binder is equal to 100%.

**2.** Use of the electrically conductive binder according to claim 1, wherein said electrically conductive binder comprises further additions, such as water reducers, pigments, polymers, a calcareous filler, fillers and/or silica fumes.

**3.** Use of the electrically conductive binder according to one or more of the previous claims, wherein the cement is selected from Portland cement, composite cements defined by the standards EN 197-1:2011, EN 197-5:2021 or ASTM C150/C150M-21, super sulfated cement, calcium aluminate cement, calcium sulfoaluminate cement or a binder of the geopolymer type, the cement is preferably CEM I 52.5 (R or N) cement as defined according to the standard EN 197-1:2011.

**4.** Use of the electrically conductive binder according to one or more of the previous claims, wherein the superplasticizer is a sterically stabilizing superplasticizer, preferably a copolymer based on polycarboxylate-ether (PCE) or mixtures thereof.

**5.** Use of the electrically conductive binder according to one or more of the previous claims, wherein the rheology modifier is selected from a cellulose or a functionalized cellulose having a weight molecular weight ranging from 20 to 20,000 Da, polyethylene glycol, diethylene glycol, Arabic gum, polyvinyl alcohol/acetate, polyvinylpyrrolidone, colloidal silica, polyacrylamide, latex and mixtures thereof.

**6.** Use of the electrically conductive binder according to one or more of the previous claims, wherein the expansive mineral agent is selected from calcium oxide, calcium sulfo-aluminate, calcium sulfate or mixtures thereof, preferably calcium oxide and the defoamer is selected from tributyl phosphate, polyacrylate, modified siloxane, polyethersiloxane or mixtures thereof, preferably tributyl phosphate.

**7.** Use of the electrically conductive binder according to one or more of the previous claims, wherein the graphite is natural graphite in flakes with a carbon content by weight ranging from 60% to 100%, preferably with a carbon content by weight higher than 90% in weight, more preferably with a carbon content by weight higher than 94%, it is even more preferably natural lamellar graphite with a cumulative passage through the 150-mesh or 100-mesh sieve higher than 80%; wherein the graphene is a graphite nano-plate paste with a number of layers ranging from 10 to 100 layers, or dry graphene as such and wherein the weight ratio between graphene and graphite ranges from 0.001 to 0.02, preferably from 0.002 to 0.015 and even more preferably from 0.005 to 0.01.

**8.** Use of the electrically conductive binder according to one or more of the previous claims, wherein the steel fibers have an aspect ratio ranging from 50 to 80, preferably of steel, straight with a length equal to 12.5 mm and with a diameter equal to 0.2 mm.

**9.** Use of a cement mixture for monitoring the deformation and cracking state of concrete structures, said cement mixture comprising the electrically conductive binder according to one or more of claims 1-8 and water.

**10.** Use of the cement mixture according to claim 9, wherein the water/cement weight ratio varies within the range of 0.6 to 1.5, preferably from 0.8 to 1.1, and the water/electrically conductive binder weight ratio varies within the range of 0.48 to 0.65, preferably from 0.5 to 0.6.

**11.** A self-sensing concrete comprising a concrete structure and a cement mixture consisting of the electrically conductive binder according to one or more of claims 1 to 9 and water, said cement mixture being applied to the surface of the concrete structure or integrated into a part of the structure itself.

**12.** The self-sensing concrete according to claim 11, wherein the cement mixture has a water/cement weight ratio which varies within the range of 0.6 to 0.94 for vertical applications and a water/cement weight ratio which varies within the range of 0.94 to 1.5 for horizontal applications.

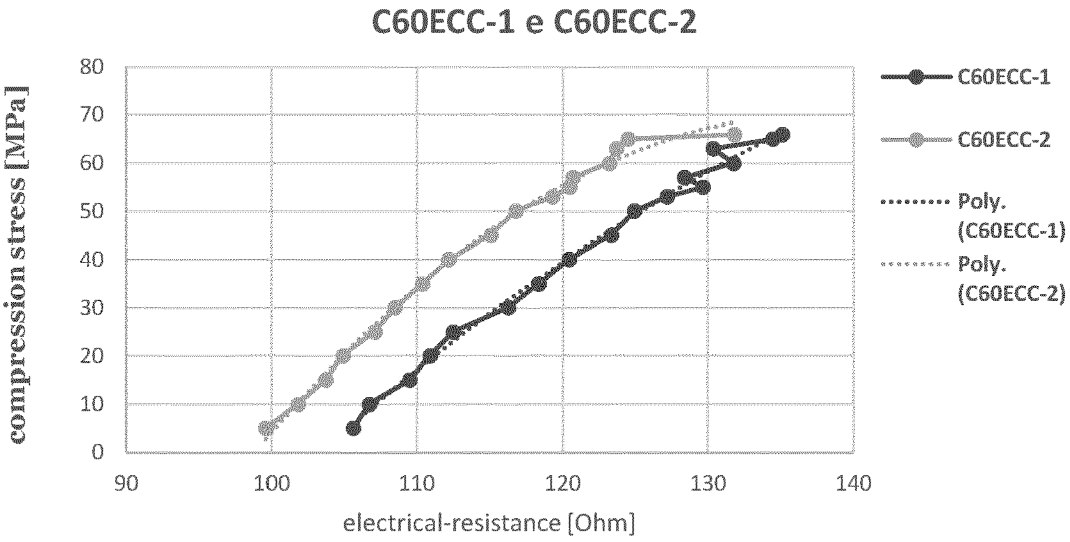
C60ECC-1 e C60ECC-2
compression stress [MPa]
0
10
20
30
40
50
60
70
80
90
100
110
120
130
140
electrical-resistance [Ohm]
C60ECC-1
C60ECC-2
Poly. (C60ECC-1)
Poly. (C60ECC-2)

Fig. 1

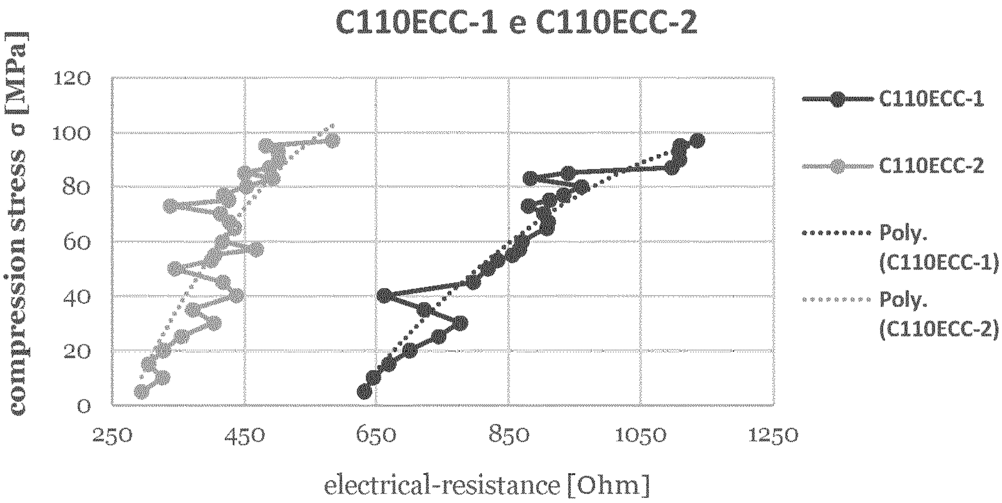
C110ECC-1 e C110ECC-2
compression stress σ [MPa]
0
20
40
60
80
100
120
250
450
650
850
1050
1250
electrical-resistance [Ohm]
C110ECC-1
C110ECC-2
Poly. (C110ECC-1)
Poly. (C110ECC-2)

Fig. 2

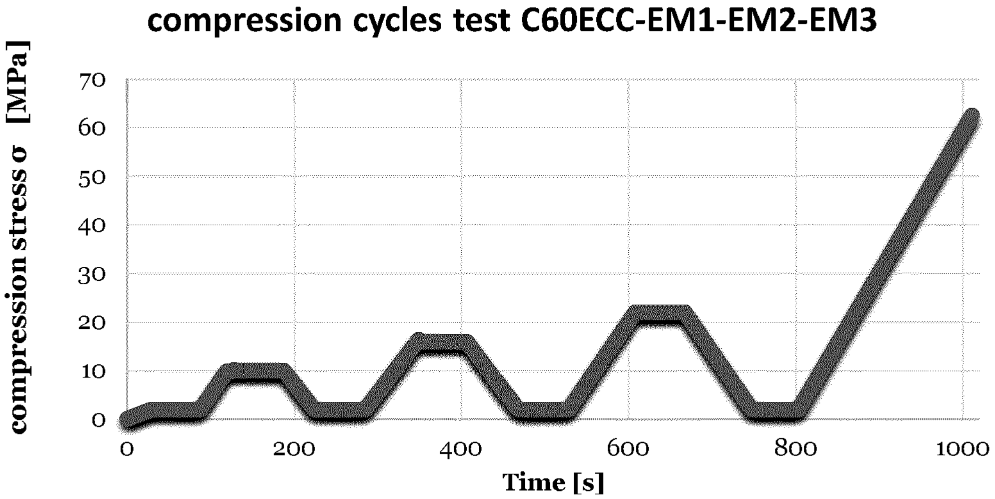
compression cycles test C60ECC-EM1-EM2-EM3
compression stress σ [MPa]
70
60
50
40
30
20
10
0
0
200
400
600
800
1000
Time [s]

Fig. 3

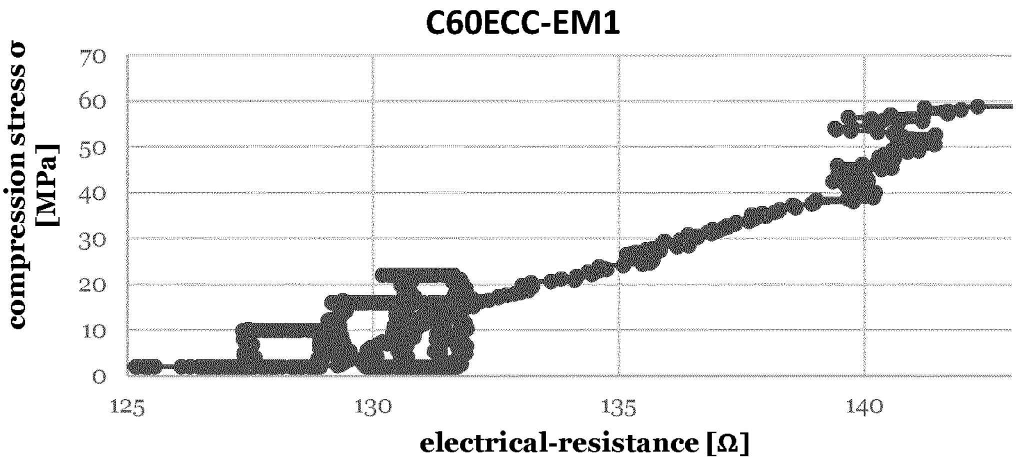
C60ECC-EM1
compression stress σ [MPa]
70
60
50
40
30
20
10
0
125
130
135
140
electrical-resistance [Ω]

Fig. 4

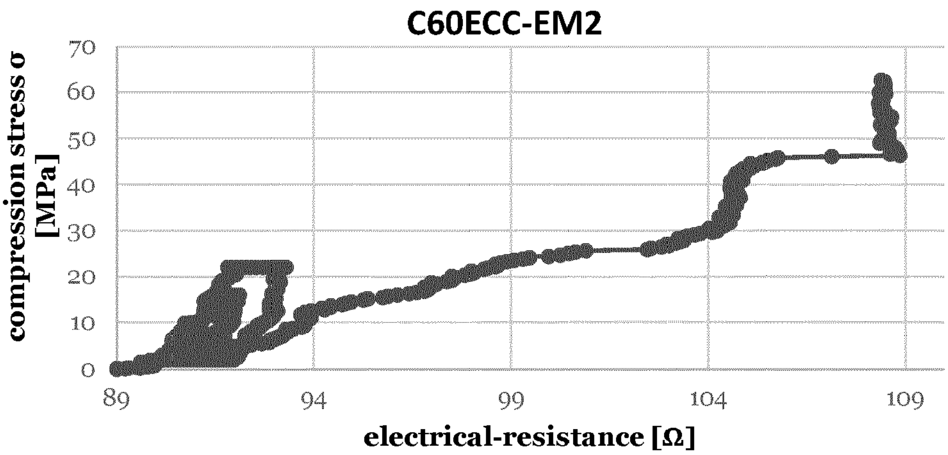


Fig. 5

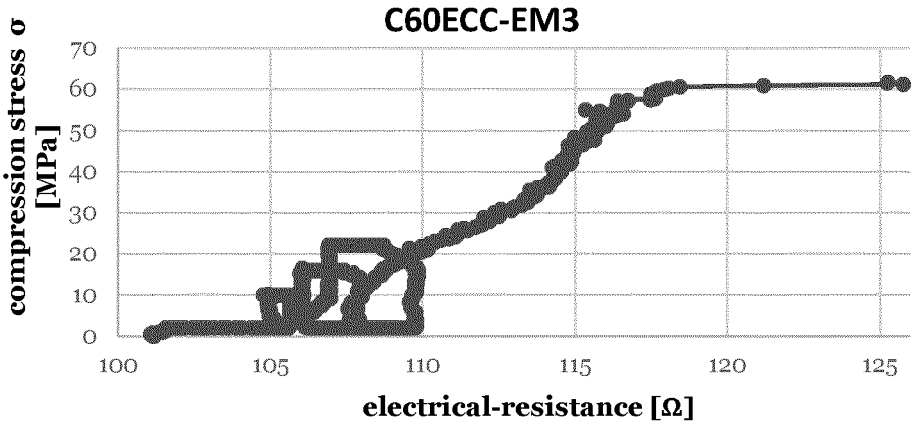


Fig. 6

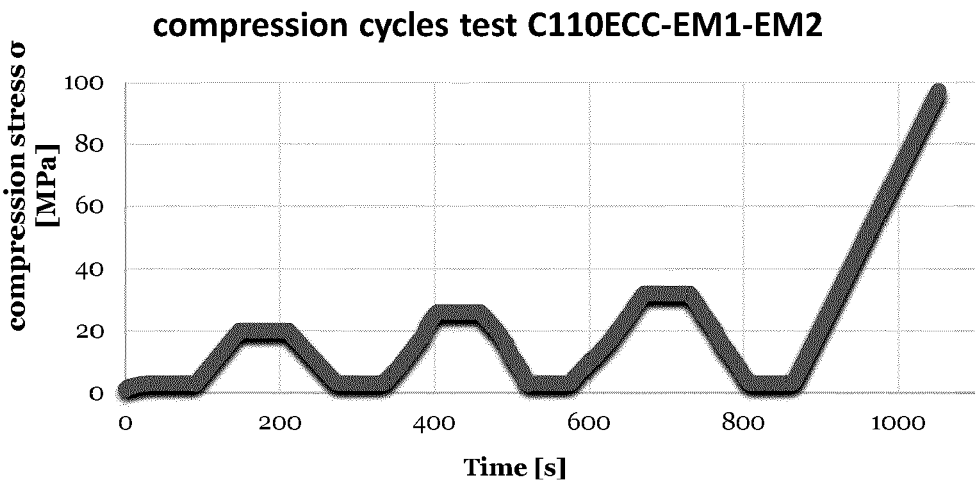


Fig. 7

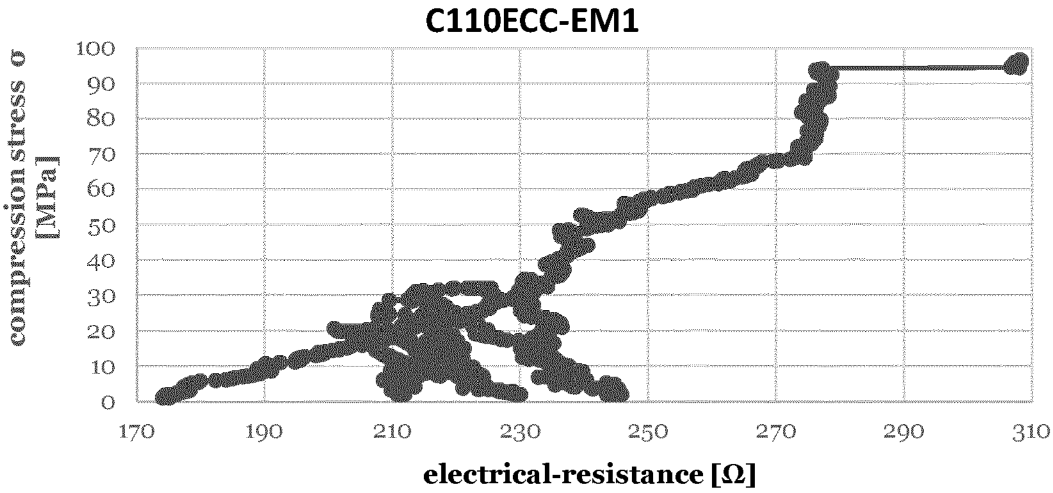
C110ECC-EM1
compression stress σ [MPa]
100
90
80
70
60
50
40
30
20
10
0
170
190
210
230
250
270
290
310
electrical-resistance [Ω]

Fig. 8

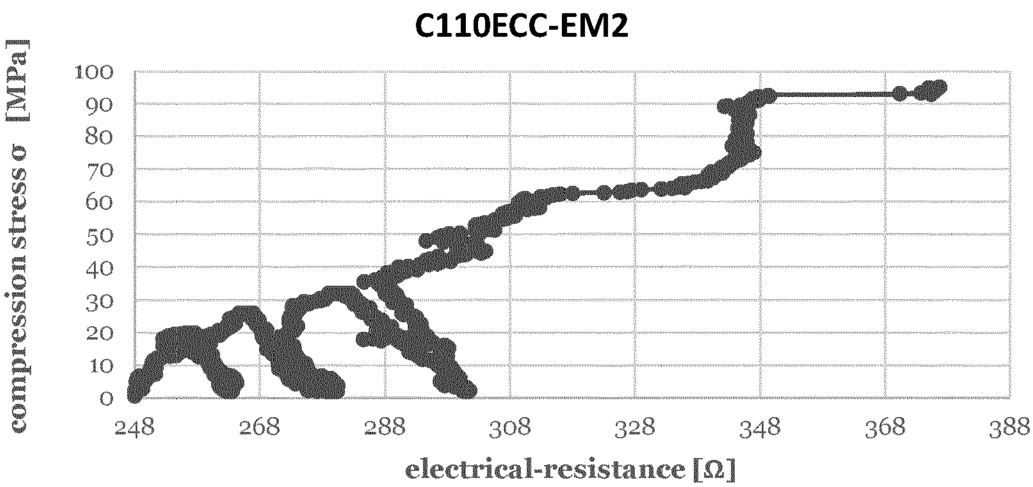
C110ECC-EM2
compression stress σ [MPa]
100
90
80
70
60
50
40
30
20
10
0
248
268
288
308
328
348
368
388
electrical-resistance [Ω]

Fig. 9

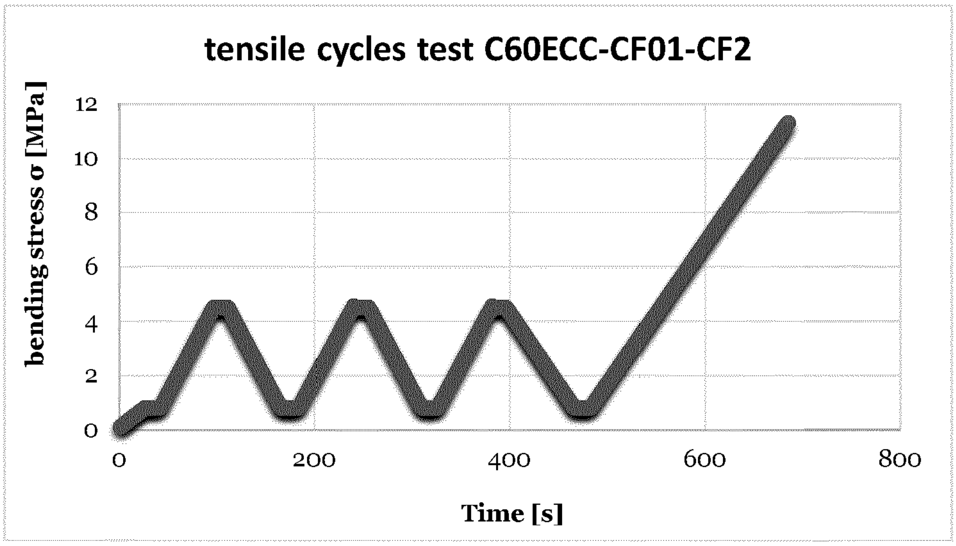
tensile cycles test C60ECC-CF01-CF2
bending stress σ [MPa]
0
2
4
6
8
10
12
0
200
400
600
800
Time [s]

Fig. 10

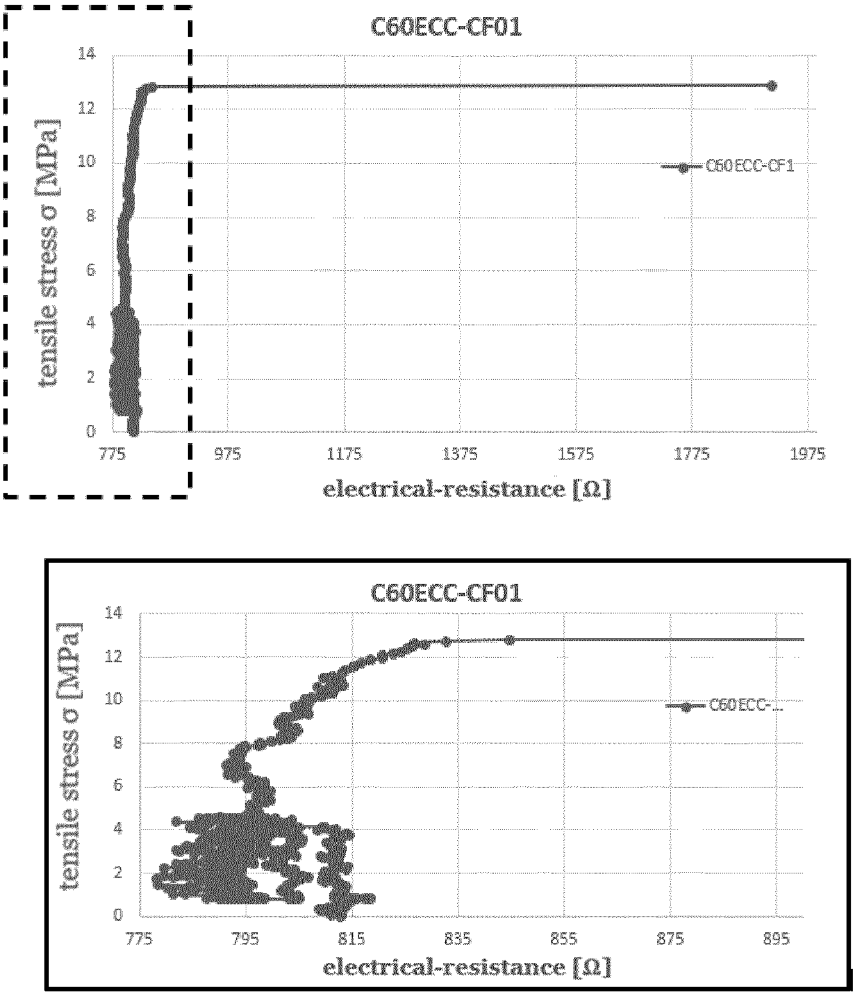
C60ECC-CF01
tensile stress σ [MPa]
0
2
4
6
8
10
12
14
775
975
1175
1375
1575
1775
1975
C60ECC-CF1
electrical-resistance [Ω]
C60ECC-CF01
tensile stress σ [MPa]
0
2
4
6
8
10
12
14
775
795
815
835
855
875
895
C60ECC-...
electrical-resistance [Ω]

Fig. 11

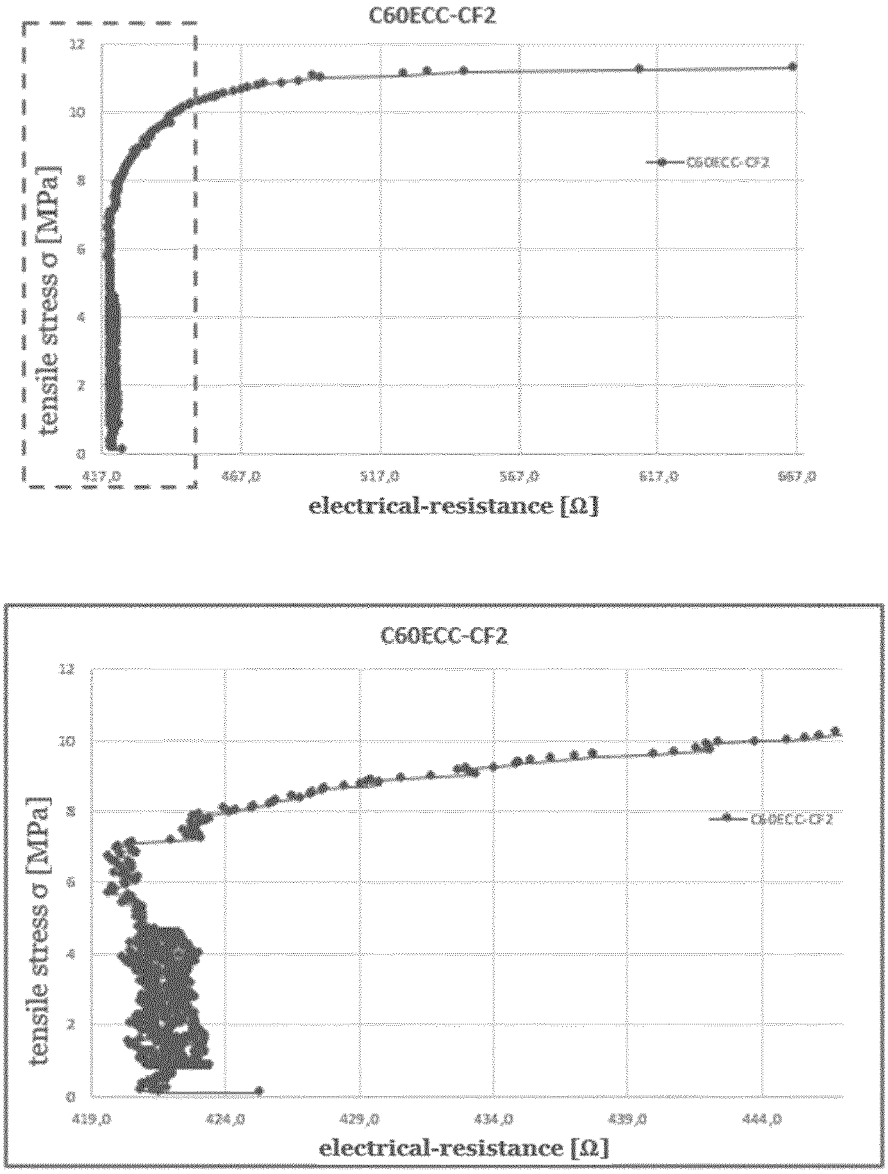
C60ECC-CF2
tensile stress σ [MPa]
0
2
4
6
8
10
12
417,0
467,0
517,0
567,0
617,0
667,0
electrical-resistance [Ω]
C60ECC-CF2
C60ECC-CF2
tensile stress σ [MPa]
0
2
4
6
8
10
12
419,0
424,0
429,0
434,0
439,0
444,0
electrical-resistance [Ω]
C60ECC-CF2

Fig. 12

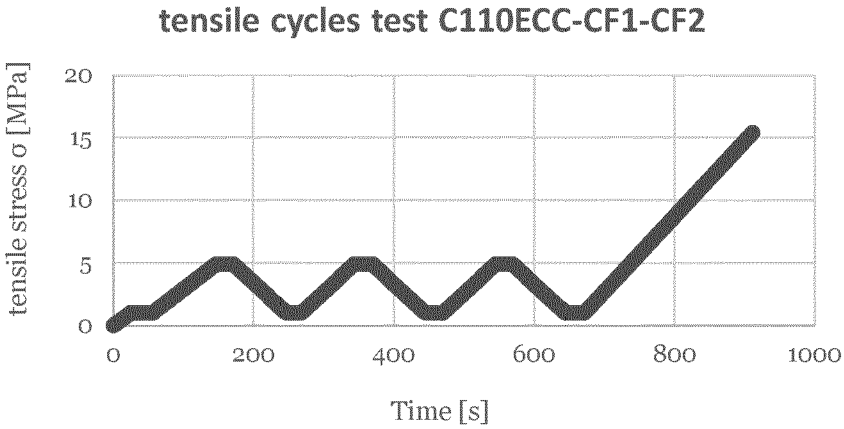
tensile cycles test C110ECC-CF1-CF2
tensile stress σ [MPa]
Time [s]

Fig. 13

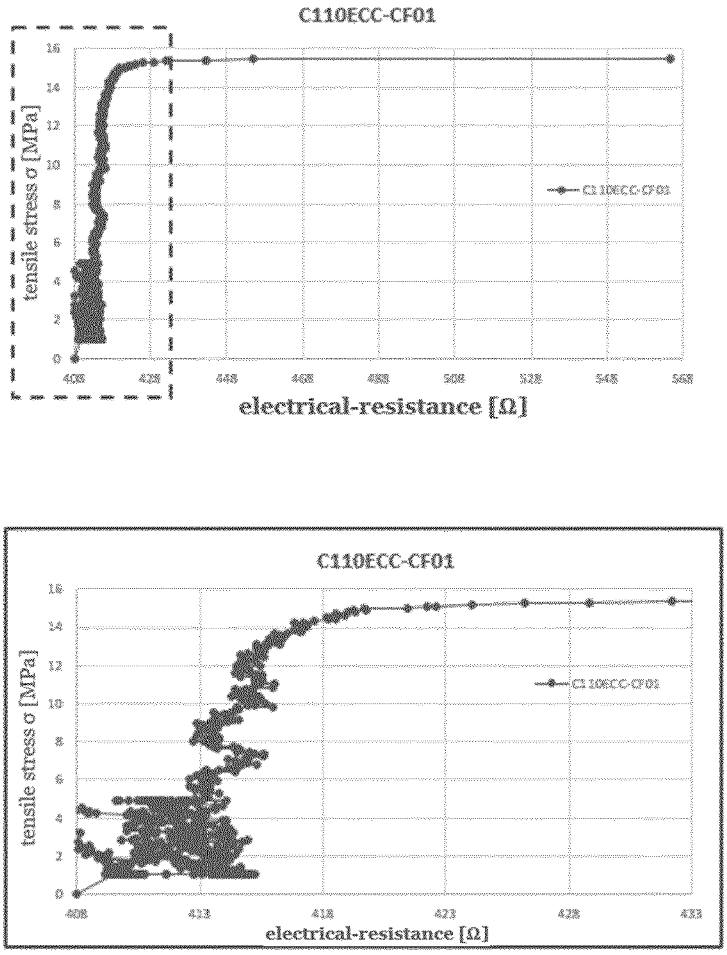
C110ECC-CF01
tensile stress σ [MPa]
electrical-resistance [Ω]
C110ECC-CF01
tensile stress σ [MPa]
electrical-resistance [Ω]

Fig. 14

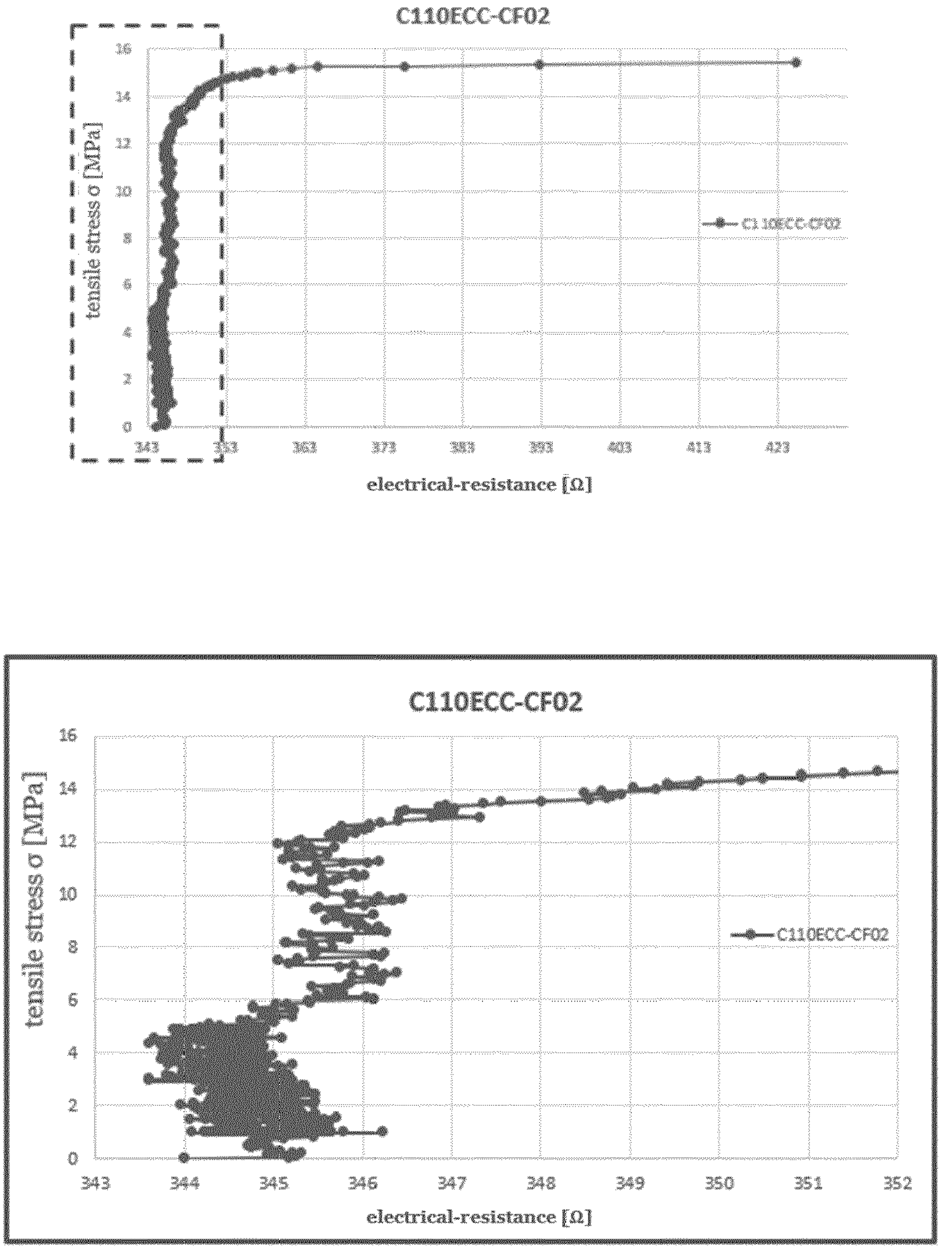
C110ECC-CF02
tensile stress σ [MPa]
electrical-resistance [Ω]
C110ECC-CF02
16
14
12
10
8
6
4
2
0
343
353
363
373
383
393
403
413
423
C110ECC-CF02
tensile stress σ [MPa]
electrical-resistance [Ω]
C110ECC-CF02
343
344
345
346
347
348
349
350
351
352

Fig. 15

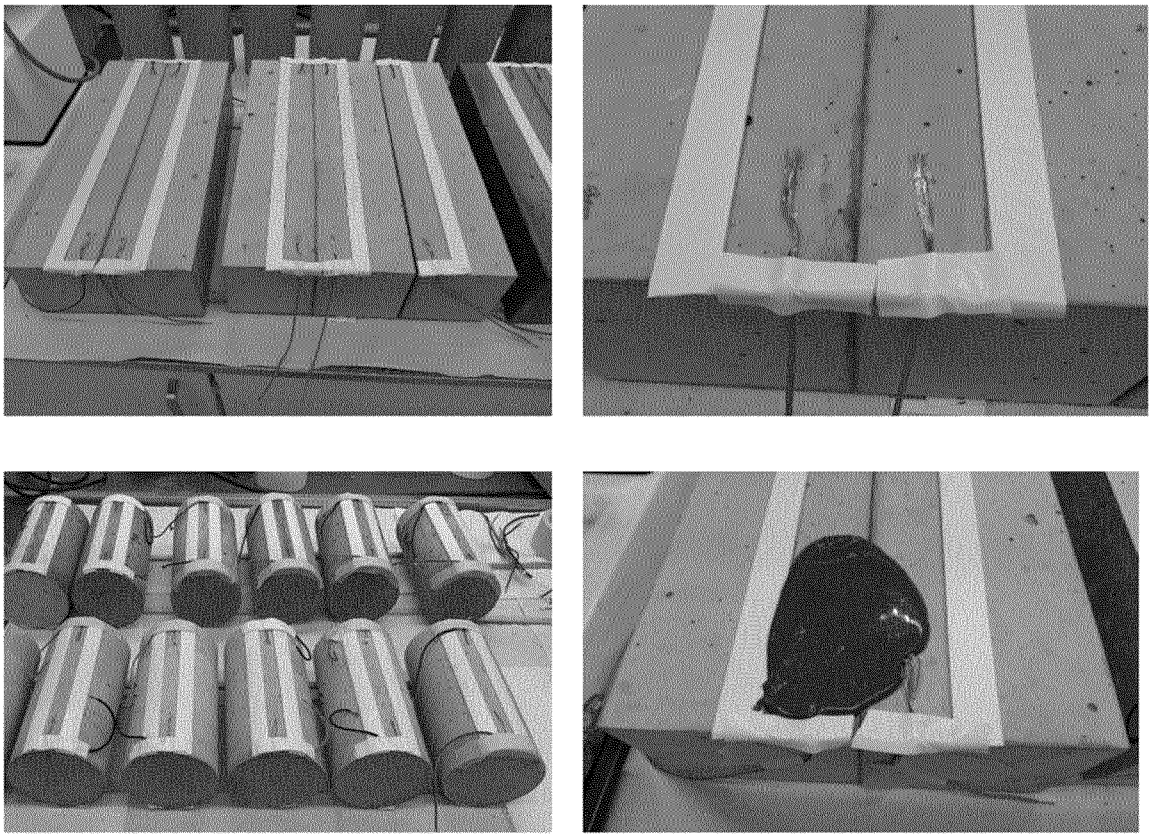

Fig. 16

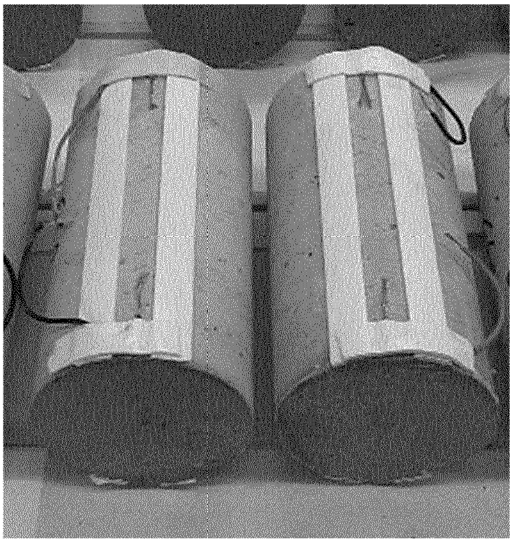

Fig. 17

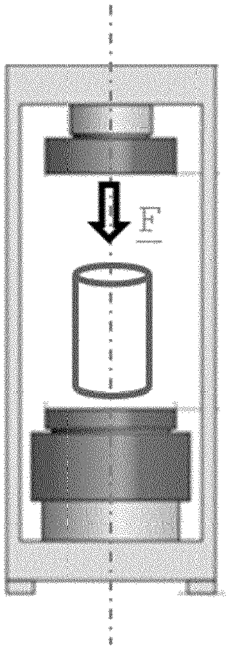


Fig. 18

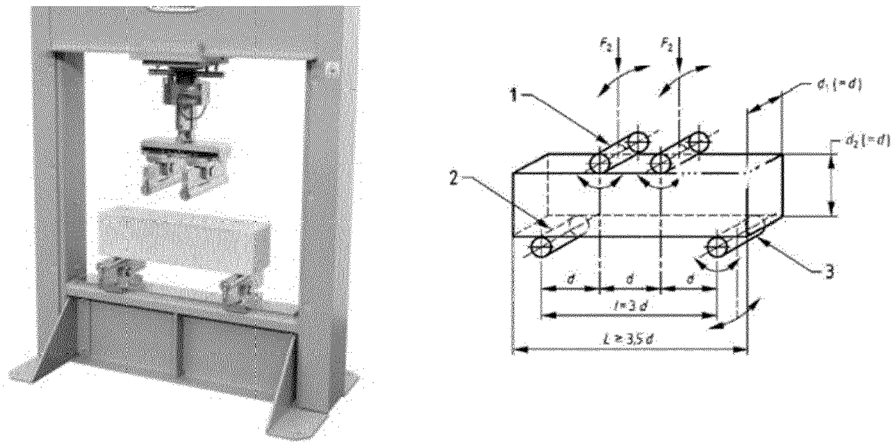


Fig. 19

Europäisches Patentamt
European Patent Office
Office européen des brevets

# EUROPEAN SEARCH REPORT

Application Number
EP 23 15 5418

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/093445 A1 (STATE GRID CORP CHINA [CN] ET AL.) 20 May 2021 (2021-05-20)<br>* the whole document *<br>----- | 1-12 | INV.<br>C04B28/04<br>C04B28/06<br>C04B111/94 |
| X<br><br>A | CN 112 500 067 A (CHANGAN UNIV) 16 March 2021 (2021-03-16)<br>* the whole document *<br>----- | 1-4,9-11<br><br>5-8,12 | |

TECHNICAL FIELDS SEARCHED (IPC)
C04B

The present search report has been drawn up for all claims

| Place of search | Date of completion of the search | Examiner |
|---|---|---|
| Munich | 24 May 2023 | Roesky, Rainer |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 15 5418

This annex lists the patent family members relating to the patent documents cited in the above-mentioned European search report. The members are as contained in the European Patent Office EDP file on
The European Patent Office is in no way liable for these particulars which are merely given for the purpose of information.

24-05-2023

| Patent document cited in search report | Publication date | Patent family member(s) | Publication date |
|---|---|---|---|
| WO 2021093445 A1 | 20-05-2021 | AU 2020384570 A1 | 17-06-2021 |
| | | CN 110963758 A | 07-04-2020 |
| | | WO 2021093445 A1 | 20-05-2021 |
| CN 112500067 A | 16-03-2021 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 112500067 A
- WO 2021093445 A1
- EP 3838864 A


### Non-patent literature cited in the description


- **P.WICK et al.** Classification Framework for Graphene-Based Materials. *Angewandte Chemie Int.,* vol. 53 (30), 7714-7718